# EUROPEAN PATENT SPECIFICATION

(11) **EP 4 502 641 B1**
(45) Date of publication and mention of the grant of the patent: **29.07.2026**
(21) Application number: 22934047.6
(22) Date of filing: 29.03.2022
(51) Int. Cl.: G01S 5/02, H04W 64/00, H04W 72/02, H04W 4/00

(54) **METHOD AND DEVICE FOR DETERMINING RANGING SIDELINK POSITIONING POLICY**
VERFAHREN UND VORRICHTUNG ZUR BESTIMMUNG EINER RANGING-SIDELINK-POSITIONIERUNGSRICHTLINIE
PROCÉDÉ ET DISPOSITIF DE DÉTERMINATION DE POLITIQUE DE POSITIONNEMENT DE LIAISON LATÉRALE DE TÉLÉMÉTRIE

(43) Date of publication of application: 05.02.2025
(73) Proprietor: Beijing Xiaomi Mobile Software Co., Ltd., Beijing 100085 (CN)
(72) Inventor: SHEN, Yang, Beijing 100085 (CN)
(74) Representative: Stöckeler, Ferdinand
(86) International application number: PCT/CN2022/083867
(87) International publication number: WO 2023/184192

(56) References cited:
- EP-A1- 4 451 738
- WO-A1-2021/240478
- WO-A1-2021/240478
- WO-A1-2022/034485
- WO-A2-2022/034484
- WO-A2-2022/034484
- CN-A- 111 213 393
- CN-A- 113 574 964
- US-A1- 2021 377 699
- "3rd Generation Partnership Project; Technical Specification Group Services and System Aspects; Study on Architecture Enhancement to support Ranging based services and sidelink positioning; (Release 18)", no. V0.1.0, 4 March 2022 (2022-03-04), pages 1 - 16, XP052144386, Retrieved from the Internet <URL:https://ftp.3gpp.org/Specs/archive/23_series/23.700-86/23700-86-010.zip Draft_TR23.700-86v010_rmr02.docx> [retrieved on 20220304]

## Description

### FIELD

The present invention relates to the field of mobile communication technologies, and in particular to a method and device for determining a ranging/sidelink positioning policy.

### BACKGROUND

In a mobile communication system, user equipment (UE) may exhibit various capabilities. For example, the UE may support functions such as a proximity service (ProSe), a Vehicle to Everything (V2X), and ranging/sidelink positioning. In order to enable the UE that supports the ranging/sidelink positioning to perform a ranging/sidelink positioning service, the network device needs to provide relevant configuration data to the UE. Therefore, how to determine and provide configuration data for performing the ranging/sidelink positioning service to the UE has become an urgent problem to be solved.

WO2022/034484 A2 discloses a method for determining a ranging/sidelink positioning policy, performed by a policy control function. WO2021240478 Al discloses methods for sidelink resource pool configuration. The parameter configuration method according to embodiments of this application includes: a UE sends target information to a network side device, where the target information is used to request for a target parameter for ranging and/or sidelink positioning, and the target information includes at least one of the following: capability information of the UE about supporting ranging, capability information of the UE about supporting sidelink positioning, request information for a ranging policy, and request information for a sidelink positioning policy; and the UE receives the target parameter sent by the network side device.

### SUMMARY

The invention is set out in the appended set of claims. The present invention provides a method and device for determining a ranging/sidelink positioning policy. According to the technical solution provided by the present invention, the network device can determine for the UE the ranging/sidelink positioning policy for providing the configuration data required by the ranging/sidelink positioning service, which fills the technical gap in the existing technology on how to determine and provide the configuration data for performing the ranging/sidelink positioning service to the UE.

According to a first aspect of the present invention, there is provided a method for determining a ranging/sidelink positioning policy, performed by a policy control function (PCF) network element. The method includes: determining a ranging/sidelink positioning policy for a user equipment (UE) according to policy-related information. The ranging/sidelink positioning policy includes a parameter required to perform a ranging/sidelink positioning service. The policy-related information includes at least one of: capability information received from an access and mobility management function (AMF) network element corresponding to the UE, where the capability information indicates that the UE at least supports ranging/sidelink positioning, or a policy provision request included in a UE policy container received from the UE, where the policy provision request at least includes a ranging/sidelink positioning policy provision request for requesting the ranging/sidelink positioning policy.

Optionally, determining the ranging/sidelink positioning policy for the UE includes: determining, based on a local policy of the PCF network element or information obtained from a unified data repository (UDR) network element, the parameter and a corresponding parameter value included in the ranging/sidelink positioning policy.

Optionally, the ranging/sidelink positioning policy includes a dedicated parameter for the ranging/sidelink positioning service and a common parameter for both the ranging/sidelink positioning service and at least one of a proximity service (ProSe) and a vehicle to everything (V2X) service.

Optionally, in a case that the policy-related information includes the capability information, and the capability information indicates that the UE further supports the ProSe, in a case that the policy-related information includes the policy provision request, and the policy provision request further includes a ProSe policy provision request for requesting a ProSe policy, or in a case that the policy-related information includes the capability information and the policy provision request, and the capability information indicates that the UE further supports the ProSe, determining the ranging/sidelink positioning policy for the UE includes: determining the dedicated parameter and a corresponding parameter value included in the ranging/sidelink positioning policy according to a local policy of the PCF network element or information received from a UDR network element, and determining a parameter and a value of the parameter included in the ProSe policy for the UE as the common parameter and a corresponding parameter value included in the ranging/sidelink positioning policy, respectively.

Optionally, in a case that the policy-related information includes the capability information, and the capability information indicates that the UE further supports the ProSe, in a case that the policy-related information includes the policy provision request, and the policy provision request further includes a ProSe policy provision request for requesting a ProSe policy, or in a case that the policy-related information includes the capability information and the policy provision request, and the capability information indicates that the UE further supports the ProSe, determining the ranging/sidelink positioning policy for the UE includes: determining the dedicated parameter and a corresponding parameter value included in the ranging/sidelink positioning policy according to a local policy of the PCF network element or information received from a UDR network element, and determining a parameter included in the ProSe policy for the UE as the common parameter included in the ranging/sidelink positioning policy, and obtaining a parameter value of each common parameter from the UDR.

Optionally, in a case that the policy-related information includes the capability information, and the capability information indicates that the UE further supports the V2X, in a case that the policy-related information includes the policy provision request, and the policy provision request further includes a V2X policy provision request for requesting a V2X policy, or in a case that the policy-related information includes the capability information and the policy provision request, and the capability information indicates that the UE further supports the V2X, determining the ranging/sidelink positioning policy for the UE includes: determining the dedicated parameter and a corresponding parameter value included in the ranging/sidelink positioning policy according to a local policy of the PCF network element or information received from a UDR network element, and determining a parameter and a value of the parameter included in the V2X policy for the UE as the common parameter and a corresponding parameter value included in the ranging/sidelink positioning policy, respectively.

Optionally, in a case that the policy-related information includes the capability information, and the capability information indicates that the UE further supports the V2X, in a case that the policy-related information includes the policy provision request, and the policy provision request further includes a V2X policy provision request for requesting a V2X policy, or in a case that the policy-related information includes the capability information and the policy provision request, and the capability information indicates that the UE further supports the V2X, determining the ranging/sidelink positioning policy for the UE includes: determining the dedicated parameter and a corresponding parameter value included in the ranging/sidelink positioning policy according to a local policy of the PCF network element or information received from a UDR network element, and determining a parameter included in the V2X policy for the UE as the common parameter included in the ranging/sidelink positioning policy, and obtaining a parameter value of each common parameter from the UDR network element.

Optionally, in a case that the policy-related information includes the capability information, and the capability information indicates that the UE further supports the ProSe and the V2X, in a case that the policy-related information includes the policy provision request, and the policy provision request further includes a ProSe policy provision request for requesting a ProSe policy and a V2X policy provision request for requesting a V2X policy, or in a case that the policy-related information includes the capability information and the policy provision request, and the capability information indicates that the UE further supports the ProSe and the V2X, determining the ranging/sidelink positioning policy for the UE includes: determining the dedicated parameter and a corresponding parameter value included in the ranging/sidelink positioning policy according to a local policy of the PCF network element or information received from a UDR network element, and determining two sets of common parameters for the ranging/sidelink positioning policy, where a parameter and a value of the parameter included in the ProSe policy for the UE are determined as a first set common parameter and a corresponding parameter value included in the ranging/sidelink positioning policy, respectively, and a parameter and a value of the parameter included in the V2X policy for the UE are determined as a second set common parameter and a corresponding parameter value included in the ranging/sidelink positioning policy, respectively.

Optionally, in a case that the policy-related information includes the capability information, and the capability information indicates that the UE further supports the ProSe and the V2X, in a case that the policy-related information includes the policy provision request, and the policy provision request further includes a ProSe policy provision request for requesting a ProSe policy and a V2X policy provision request for requesting a V2X policy, or in a case that the policy-related information includes the capability information and the policy provision request, and the capability information indicates that the UE further supports the ProSe and the V2X, determining the ranging/sidelink positioning policy for the UE includes: determining the dedicated parameter and a corresponding parameter value included in the ranging/sidelink positioning policy according to a local policy of the PCF network element or information received from a UDR network element, and determining two sets of common parameters for the ranging/sidelink positioning policy, and obtaining a parameter value of each common parameter from the UDR network element, where a parameter included in the ProSe policy for the UE is determined as a first set common parameter included in the ranging/sidelink positioning policy, and a parameter included in the V2X policy for the UE is determined as a second set common parameter included in the ranging/sidelink positioning policy.

Optionally, the method further includes: sending the ranging/sidelink positioning policy to the UE through the AMF network element.

Optionally, the dedicated parameter includes: a destination layer-2 identifier, a parameter for proximity communication 5 (PC5) radio access technology (RAT) selection and PC5 transmission configuration selection, a parameter related to privacy, a parameter about when long term evolution (LTE) PC5 is selected, a parameter about when new ratio (NR) PC5 is selected, and a dedicated authorization policy parameter. The common parameter includes: a common authorization policy parameter, a radio parameter, a restricted ProSe discovery UE identifier parameter, a group member discovery parameter, a validity timing parameter, a groupcast mode ProSe direct communication parameter.

Optionally, in a case that the UE is served by a next generation radio access network (NG-RAN) or by an evolved universal mobile telecommunication system terrestrial radio access network (E-UTRAN), the dedicated authorization policy parameter includes at least one of: for the UE that supports the ranging/sidelink positioning, at least one public land mobile network (PLMN) in which the UE is authorized as a reference UE or a target UE to perform the ranging/sidelink positioning service; for the UE that supports the ranging/sidelink positioning, at least one PLMN in which the UE is authorized to perform a regular ranging/sidelink positioning service to obtain a relevant distance; for the UE that supports the ranging/sidelink positioning, at least one PLMN in which the UE is authorized to perform a regular ranging/sidelink positioning service to obtain a relevant direction; for the UE that supports the ranging/sidelink positioning, at least one PLMN in which the UE is authorized to perform a high-accuracy ranging/sidelink positioning service to obtain a relevant distance; or for the UE that supports the ranging/sidelink positioning, at least one PLMN in which the UE is authorized to perform a high-accuracy ranging/sidelink positioning service to obtain a relevant direction.

Optionally, in a case that the UE is not served by a NG-RAN and is not served by an E-UTRAN, the dedicated authorization policy parameter includes at least one of: for the UE that supports the ranging/sidelink positioning, whether the UE is authorized as a reference UE or a target UE to perform the ranging/sidelink positioning service; for the UE that supports the ranging/sidelink positioning, whether the UE is authorized to perform a regular ranging/sidelink positioning service to obtain a relevant distance; for the UE that supports the ranging/sidelink positioning, whether the UE is authorized to perform a regular ranging/sidelink positioning service to obtain a relevant direction; for the UE that supports the ranging/sidelink positioning, whether the UE is authorized to perform a high-accuracy ranging/sidelink positioning service to obtain a relevant distance; or for the UE that supports the ranging/sidelink positioning, whether the UE is authorized to perform a high-accuracy ranging/sidelink positioning service to obtain a relevant direction.

According to a second aspect of the present invention, there is provided a method for determining a ranging/sidelink positioning policy, performed by a user equipment (UE), including: determining a ranging/sidelink positioning policy sent by an access and mobility management function (AMF) network element corresponding to the UE as the ranging/sidelink positioning policy for the UE, where the ranging/sidelink positioning policy includes a parameter required to perform a ranging/sidelink positioning service.

Optionally, the method further includes: performing the ranging/sidelink positioning service according to the ranging/sidelink positioning policy after receiving a ranging/sidelink positioning service request.

Optionally, the ranging/sidelink positioning policy includes a dedicated parameter for the ranging/sidelink positioning service and a common parameter for both the ranging/sidelink positioning service and at least one of a proximity service (ProSe) and a vehicle to everything (V2X) service.

Optionally, the dedicated parameter includes: a destination layer-2 identifier, a parameter for proximity communication 5 (PC5) radio access technology (RAT) selection and PC5 transmission configuration selection, a parameter related to privacy, a parameter about when long term evolution (LTE) PC5 is selected, a parameter about when new ratio (NR) PC5 is selected, and a dedicated authorization policy parameter. The common parameter includes: a common authorization policy parameter, a radio parameter, a restricted ProSe discovery UE identifier parameter, a group member discovery parameter, a validity timing parameter, a groupcast mode ProSe direct communication parameter.

Optionally, in a case that the UE is served by a next generation radio access network (NG-RAN) or by an evolved universal mobile telecommunication system terrestrial radio access network (E-UTRAN), the dedicated authorization policy parameter includes at least one of: for the UE that supports the ranging/sidelink positioning, at least one public land mobile network (PLMN) in which the UE is authorized as a reference UE or a target UE to perform the ranging/sidelink positioning service; for the UE that supports the ranging/sidelink positioning, at least one PLMN in which the UE is authorized to perform a regular ranging/sidelink positioning service to obtain a relevant distance; for the UE that supports the ranging/sidelink positioning, at least one PLMN in which the UE is authorized to perform a regular ranging/sidelink positioning service to obtain a relevant direction; for the UE that supports the ranging/sidelink positioning, at least one PLMN in which the UE is authorized to perform a high-accuracy ranging/sidelink positioning service to obtain a relevant distance; or for the UE that supports the ranging/sidelink positioning, at least one PLMN in which the UE is authorized to perform a high-accuracy ranging/sidelink positioning service to obtain a relevant direction.

Optionally, in a case that the UE is not served by a NG-RAN and is not served by an E-UTRAN, the dedicated authorization policy parameter includes at least one of: for the UE that supports the ranging/sidelink positioning, whether the UE is authorized as a reference UE or a target UE to perform the ranging/sidelink positioning service; for the UE that supports the ranging/sidelink positioning, whether the UE is authorized to perform a regular ranging/sidelink positioning service to obtain a relevant distance; for the UE that supports the ranging/sidelink positioning, whether the UE is authorized to perform a regular ranging/sidelink positioning service to obtain a relevant direction; for the UE that supports the ranging/sidelink positioning, whether the UE is authorized to perform a high-accuracy ranging/sidelink positioning service to obtain a relevant distance; or for the UE that supports the ranging/sidelink positioning, whether the UE is authorized to perform a high-accuracy ranging/sidelink positioning service to obtain a relevant direction.

According to a third aspect of the present invention, there is provided a device for determining a ranging/sidelink positioning policy, applied to a PCF network element, including: a processing module configured to determine a ranging/sidelink positioning policy for a user equipment (UE) according to policy-related information. The ranging/sidelink positioning policy includes a parameter required to perform a ranging/sidelink positioning service. The policy-related information includes at least one of: capability information received from an access and mobility management function (AMF) network element corresponding to the UE, where the capability information indicates that the UE at least supports ranging/sidelink positioning, or a policy provision request included in a UE policy container received from the UE, where the policy provision request at least includes a ranging/sidelink positioning policy provision request for requesting the ranging/sidelink positioning policy.

According to a fourth aspect of the present invention, there is provided a device for determining a ranging/sidelink positioning policy, applied to UE, including: a processing module configured to determine a ranging/sidelink positioning policy sent by an AMF network element corresponding to the UE as the ranging/sidelink positioning policy for the UE. The ranging/sidelink positioning policy includes a parameter required to perform a ranging/sidelink positioning service.

According to a fifth aspect of the present invention, there is provided a communication device, including: a transceiver; a memory; and a processor respectively connected to the transceiver and the memory, and configured to execute computer-executable instructions stored on the memory to control the transceiver to transmit and receive a signal and to perform the method described in the above embodiment of the first aspect or the second aspect of the present invention.

According to a sixth aspect of the present invention, there is provided a computer storage medium having stored therein computer-executable instructions that, when executed by a processor, cause the method described in the above embodiment of the first aspect or the second aspect of the present invention to be implemented.

According to the method and the device for determining the ranging/sidelink positioning policy of the embodiments of the present invention, the PCF network element determines the ranging/sidelink positioning policy for the UE according to the capability information received from the AMF network element and/or the policy provision request included in the UE measurement container from the UE, and the ranging/sidelink positioning policy includes the configuration data used to perform the ranging/sidelink positioning service, thus filling the technical gap in the existing technology on how to determine and provide the configuration data for performing the ranging/sidelink positioning service to the UE.

Additional aspects and advantages of embodiments of the present invention will be given in part in the following descriptions, become apparent in part from the following descriptions, or be learned from the practice of the embodiments of the present invention.

### BRIEF DESCRIPTION OF THE DRAWINGS

The above and/or additional aspects and advantages of the present invention will become apparent and more readily appreciated from the following descriptions made with reference to the drawings, in which:
FIG. 1 is a flowchart of a method for determining a ranging/sidelink positioning policy according to an embodiment of the present invention;
FIG. 2 is a flowchart of a method for determining a ranging/sidelink positioning policy according to an embodiment of the present invention;
FIG. 3 is a flowchart of a method for determining a ranging/sidelink positioning policy according to an embodiment of the present invention;
FIG. 4 is a flowchart of a method for determining a ranging/sidelink positioning policy according to an embodiment of the present invention;
FIG. 5 is a flowchart of a method for determining a ranging/sidelink positioning policy according to an embodiment of the present invention;
FIG. 6 is a flowchart of a method for determining a ranging/sidelink positioning policy according to an embodiment of the present invention;
FIG. 7 is a flowchart of a method for determining a ranging/sidelink positioning policy according to an embodiment of the present invention;
FIG. 8 is a flowchart of a method for determining a ranging/sidelink positioning policy according to an embodiment of the present invention;
FIG. 9 is a flowchart of a method for determining a ranging/sidelink positioning policy according to an embodiment of the present invention;
FIG. 10 is a flowchart of a method for determining a ranging/sidelink positioning policy according to another embodiment of the present invention;
FIG. 11 is a flowchart of a method for determining a ranging/sidelink positioning policy according to another embodiment of the present invention;
FIG. 12 is a block diagram of a device for determining a ranging/sidelink positioning policy according to an embodiment of the present invention;
FIG. 13 is a block diagram of a device for determining a ranging/sidelink positioning policy provided by an embodiment of the present invention;
FIG. 14 is a block diagram of a device for determining a ranging/sidelink positioning policy provided by an embodiment of the present invention;
FIG. 15 is a block diagram of a communication device provided by an embodiment of the present invention; and
FIG. 16 is a block diagram of a ship provided by an embodiment of the present invention.

### DETAILED DESCRIPTION

Embodiments of the present invention are described in detail below with reference to examples illustrated in the accompanying drawings. In the drawings, the same or similar elements and the elements having the same or similar functions are denoted by the same or similar reference numerals throughout the descriptions. The embodiments described below with reference to the accompanying drawings are explanatory, and are intended to explain the present invention and shall not be construed to limit the present invention.

The techniques described herein are not limited to the 5^{th} generation (5G) system and later evolved communication systems, not limited to LTE/LTE-advanced (LTE-A) systems, and can be used in various wireless communication systems, such as code division multiple access (CDMA), time division multiple access (TDMA), frequency division multiple access (FDMA), orthogonal frequency division multiple access (OFDMA), single-carrier frequency-division multiple access (SC-FDMA) systems and other systems.

The terminal provided by the embodiments of the present invention may be a phone, a tablet computer, a notebook computer, an ultra-mobile personal computer (UMPC), a netbook or a personal digital assistant (PDA), a mobile internet device (MID), a wearable device or a vehiclemounted device.

In the mobile communication system, the UE may exhibit various capabilities. For example, the UE may support functions such as a proximity service (ProSe), a Vehicle to Everything (V2X), and ranging/sidelink positioning (ranging/SL positioning). Ranging refers to determining a distance and/or direction between two or more UEs through the PC5 interface and/or a position of one UE (which may be called a "target UE") relative to another UE (which may be called a "reference UE"). The sidelink positioning refers to positioning the UE with the PC5 interface. Therefore, the UE's capabilities regarding ranging/sidelink positioning are used to indicate whether the UE is allowed to make distance measurement, direction measurement, or both.

Not all UEs need to support ranging/sidelink positioning. Normally, UEs that support the ranging/sidelink positioning will support ProSe and/or V2X.

In order to enable the UE that supports the ranging/sidelink positioning to perform a ranging/sidelink positioning service, the network device needs to provide relevant configuration data including policies and parameters related to the ranging/sidelink positioning service to the UE.

Therefore, how to determine and provide configuration data for performing the ranging/sidelink positioning service to the UE has become an urgent problem to be solved.

In view of this, the present invention provides a method and device for determining a ranging/sidelink positioning policy. According to the technical solution provided by the present invention, the network device can determine, for the UE, the ranging/sidelink positioning policy used to provide the configuration data required by the ranging/sidelink positioning service, which fills the technical gap in the existing technology on how to determine and provide the configuration data for performing the ranging/sidelink positioning service to the UE.

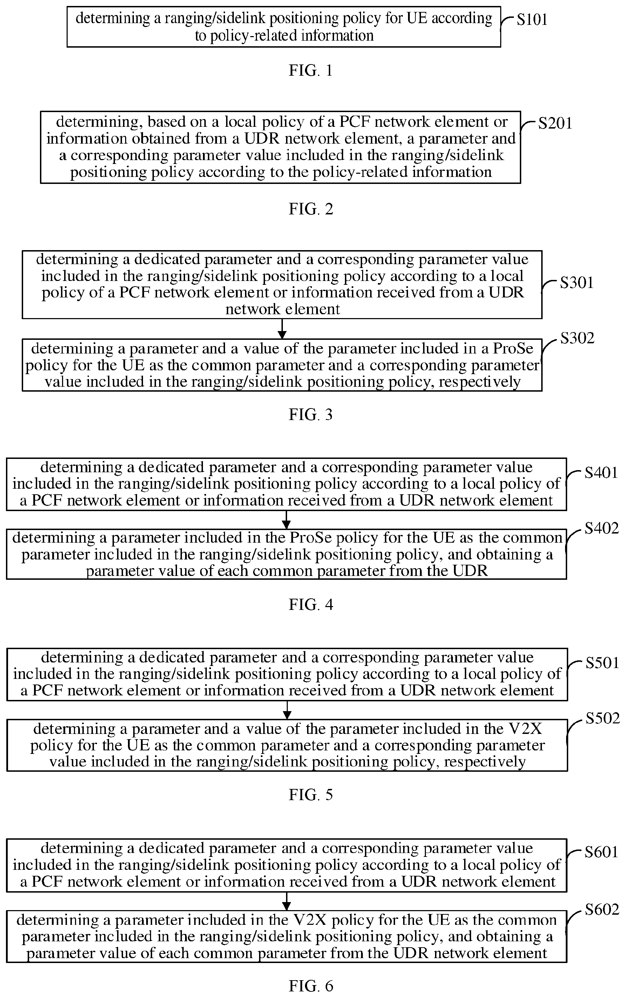

FIG. 1 is a flowchart of a method for determining a ranging/sidelink positioning policy according to an embodiment of the present invention, which is performed by policy control function (PCF). As shown in FIG. 1, the method for determining the ranging/sidelink positioning policy may include the following step.

In block S101, a ranging/sidelink positioning policy for a user equipment (UE) is determined according to the policy-related information.

The ranging/sidelink positioning policy includes a parameter required to perform a ranging/sidelink positioning service.

The policy-related information includes at least one of: capability information received from an access and mobility management function (AMF) network element corresponding to the UE, where the capability information indicates that the UE at least supports ranging/sidelink positioning, or a policy provision request included in a UE policy container received from the UE, where the policy provision request at least includes a ranging/sidelink positioning policy provision request for requesting the ranging/sidelink positioning policy.

In the present embodiment, in the case that the capability information indicating that the UE at least supports the ranging/sidelink positioning is received from the AMF network element, the PCF network element can determine the ranging/sidelink positioning policy for the UE. Alternatively, upon receiving from the UE the UE policy container at least including the ranging/sidelink positioning policy provision request, the PCF network element can determine the ranging/sidelink positioning policy for the UE. Alternatively, in the case where the capability information indicating that the UE at least supports the ranging/sidelink positioning is received from the AMF network element and the UE policy container at least including the ranging/sidelink positioning policy provision request is received from the UE, the PCF network element can determine the ranging/sidelink positioning policy for the UE.

In some embodiments, the ranging/sidelink positioning policy includes a dedicated parameter for the ranging/sidelink positioning service and a common parameter (also called a "shared parameter") for both the ranging/sidelink positioning service and at least one of a proximity service (ProSe) and a vehicle to everything (V2X) service.

The ranging/sidelink positioning policy includes configuration data for performing the ranging/sidelink positioning service. Specifically, the ranging/sidelink positioning policy may include the dedicated parameter(s) and the common parameter(s). The dedicated parameter is specially used to perform the ranging/sidelink positioning service. The common parameter is used to perform both the ranging/sidelink positioning service and the ProSe, or to perform both the ranging/sidelink positioning service and the V2X service.

According to the method for determining the ranging/sidelink positioning policy of the embodiments of the present invention, the PCF network element determines the ranging/sidelink positioning policy for the UE according to the capability information received from the AMF network element and/or the policy provision request included in the UE measurement container from the UE, and the ranging/sidelink positioning policy includes the configuration data used to perform the ranging/sidelink positioning service, thus filling the technical gap in the existing technology on how to determine and provide the configuration data for performing the ranging/sidelink positioning service to the UE.

FIG. 2 is a flowchart of a method for determining a ranging/sidelink positioning policy according to an embodiment of the present invention. In the present embodiment, the method is performed by the PCF network element, and as shown in FIG. 2, the method for determining the ranging/sidelink positioning includes the following step.

In block S201, according to policy-related information, the parameter and a corresponding parameter value included in the ranging/sidelink positioning policy for the UE is determined based on a local policy of the PCF network element or information obtained from a unified data repository (UDR) network element.

The ranging/sidelink positioning policy includes a parameter required to perform a ranging/sidelink positioning service.

The policy-related information includes at least one of: capability information received from an access and mobility management function (AMF) network element corresponding to the UE, where the capability information indicates that the UE at least supports ranging/sidelink positioning, or a policy provision request included in a UE policy container received from the UE, where the policy provision request at least includes a ranging/sidelink positioning policy provision request for requesting the ranging/sidelink positioning policy.

The local policy may be configured for the PCF network element in advance, and the local policy of the PCF network element may indicate configuration data used to perform the ranging/sidelink positioning service. Specifically, the PCF network element may indicate the required parameter(s) and value(s) thereof.

Alternatively, the configuration data including the required parameter(s) and value(s) thereof for performing the ranging/sidelink positioning service may be stored in the UDR network element in advance. The PCF network element can obtain the relevant configuration data from the UDR network element.

In the present embodiment, in the case where the capability information indicating that the UE at least supports the ranging/sidelink positioning is received from the AMF network element, the PCF network element may, based on the local policy of the PCF network element or the information received from the UDR network element, determine the ranging/sidelink positioning policy for the UE. Alternatively, in the case of receiving the UE policy container at least including the ranging/sidelink positioning policy provision request from the UE, the PCF network element may determine the ranging/sidelink positioning policy for the UE. Alternatively, in the case where the capability information indicating that the UE at least supports the ranging/sidelink positioning is received from the AMF network element and the UE policy container at least including the ranging/sidelink positioning policy provision request is received from the UE, the PCF network element can determine the ranging/sidelink positioning policy for the UE based on the local policy of the PCF network element or the information received from the UDR network element.

In some embodiments, the ranging/sidelink positioning policy includes a dedicated parameter for the ranging/sidelink positioning service and a common parameter (also called a "shared parameter") for both the ranging/sidelink positioning service and at least one of a ProSe or a V2X service.

The ranging/sidelink positioning policy includes the configuration data for performing the ranging/sidelink positioning service. Specifically, the ranging/sidelink positioning policy may include the dedicated parameter(s) and the common parameter(s). The dedicated parameter is specially used to perform the ranging/sidelink positioning service. The common parameter is used to perform both the ranging/sidelink positioning service and the ProSe, or to perform both the ranging/sidelink positioning service and the V2X service.

According to the method for determining the ranging/sidelink positioning policy of the embodiments of the present invention, the PCF network element determines, based on the local policy of the PCF network element or the information obtained from the UDR network element, the ranging/sidelink positioning policy for the UE according to the capability information received from the AMF network element and/or the policy provision request included in the UE measurement container from the UE, and the ranging/sidelink positioning policy includes the configuration data used to perform the ranging/sidelink positioning service, thus filling the technical gap in the existing technology on how to determine and provide the configuration data for performing the ranging/sidelink positioning service to the UE.

Based on the embodiment shown in FIG. 1, the present invention further provides a plurality of embodiments for determining the ranging/sidelink positioning policy.

The policy-related information described in the embodiment shown in FIG. 1 may include various contents.

For example, the following cases show different contents included in the policy-related information.

Case 1: the policy-related information includes the capability information, and the capability information indicates that the UE supports the ranging/sidelink positioning and supports the ProSe.

Case 2: the policy-related information includes the capability information, and the capability information indicates that the UE supports the ranging/sidelink positioning and supports the V2X.

Case 3: the policy-related information includes the capability information, and the capability information indicates that the UE supports the ranging/sidelink positioning, the ProSe, and the V2X.

Case 4: the policy-related information includes the policy provision request, and the policy provision request includes the ranging/sidelink positioning policy provision request and a ProSe policy provision request for requesting a ProSe policy.

Case 5: the policy-related information includes the policy provision request, and the policy provision request includes the ranging/sidelink positioning policy provision request and a V2X policy provision request for requesting a V2X policy.

Case 6: the policy-related information includes the policy provision request, and the policy provision request includes the ranging/sidelink positioning policy provision request, the ProSe policy provision request, and the V2X policy provision request.

Case 7: the policy-related information includes the capability information and the policy provision request, and the capability information indicates that the UE supports the ranging/sidelink positioning and supports the ProSe, and the policy provision request includes the ranging/sidelink positioning policy provision request.

Case 8: the policy-related information includes the capability information and the policy provision request, and the capability information indicates that the UE supports the ranging/sidelink positioning and supports the V2X, and the policy provision request includes the ranging/sidelink positioning policy provision request.

Case 9: the policy-related information includes the capability information and the policy provision request, and the capability information indicates that the UE supports the ranging/sidelink positioning, the ProSe, and the V2X, and the policy provision request includes the ranging/sidelink positioning policy provision request.

Based on different contents included in the policy-related information, the ranging/sidelink positioning policy for the UE may be determined in different embodiments. In the embodiments shown below, the ranging/sidelink positioning policy includes a dedicated parameter for the ranging/sidelink positioning service and a common parameter (also called a "shared parameter") for both the ranging/sidelink positioning service and at least one of the ProSe or the V2X service.

FIG. 3 is a flowchart of a method for determining a ranging/sidelink positioning policy according to an embodiment of the present invention. In the present embodiment, the method is performed by the PCF network element, and the method is suitable to the policy-related information in Cases 1, 4 and 7. As shown in FIG. 3, the method for determining the ranging/sidelink positioning includes the following steps.

In block S301, the dedicated parameter and a corresponding parameter value included in the ranging/sidelink positioning policy are determined according to a local policy of the PCF network element or information received from a UDR network element.

In block S302, a parameter and a value of the parameter included in the ProSe policy for the UE are determined as the common parameter and a corresponding parameter value included in the ranging/sidelink positioning policy, respectively.

The local policy may be configured for the PCF network element in advance, and the local policy of the PCF network element may indicate configuration data used to perform the ranging/sidelink positioning service, specifically may indicate the dedicated parameter and the value thereof.

Alternatively, the configuration data including the dedicated parameter and the value thereof and the value of each common parameter for performing the ranging/sidelink positioning service may be stored in the UDR network element in advance. The PCF network element can obtain the relevant configuration data from the UDR network element.

The dedicated parameter is specially used to perform the ranging/sidelink positioning service. The common parameter is used to perform both the ranging/sidelink positioning service and the ProSe, or to perform both the ranging/sidelink positioning service and the V2X service.

In the present embodiment, in the case where the capability information indicates that the UE supports the ranging/sidelink positioning and supports the ProSe is received from the AMF network element, the PCF network element can determine the dedicated parameter and the corresponding parameter value included in the ranging/sidelink positioning policy for the UE according to the local policy of the PCF network element or the information received from the UDR network element, and determine the common parameter and the corresponding parameter value included in the ranging/sidelink positioning policy for the UE according to the parameter and the value of the parameter included in the ProSe policy for the UE.

Alternatively, in the case where the UE policy container including the ranging/sidelink positioning policy provision request and the ProSe policy provision request is received from the UE, the PCF network element can determine the dedicated parameter and the corresponding parameter value included in the ranging/sidelink positioning policy for the UE according to the local policy of the PCF network element or the information received from the UDR network element, and determine the common parameter and the corresponding parameter value included in the ranging/sidelink positioning policy for the UE according to the parameter and the value of the parameter included in the ProSe policy for the UE.

Alternatively, in the case where the capability information indicates that the UE supports the ranging/sidelink positioning and supports the ProSe is received from the AMF network element and the UE policy container including the ranging/sidelink positioning policy provision request is received from the UE, the PCF network element can determine the dedicated parameter and the corresponding parameter value included in the ranging/sidelink positioning policy for the UE according to the local policy of the PCF network element or the information received from the UDR network element, and determine the common parameter and the corresponding parameter value included in the ranging/sidelink positioning policy for the UE according to the parameter and the value of the parameter included in the ProSe policy for the UE.

FIG. 4 is a flowchart of a method for determining a ranging/sidelink positioning policy according to an embodiment of the present invention. In the present embodiment, the method is performed by the PCF network element, and the method is suitable to the policy-related information in Cases 1, 4 and 7. As shown in FIG. 4, the method for determining the ranging/sidelink positioning includes the following steps.

In block S401, the dedicated parameter and a corresponding parameter value included in the ranging/sidelink positioning policy are determined according to a local policy of the PCF network element or information received from a UDR network element.

In block S402, a parameter included in the ProSe policy for the UE is determined as the common parameter included in the ranging/sidelink positioning policy, and a parameter value of each common parameter is obtained from the UDR.

The local policy may be configured for the PCF network element in advance, and the local policy of the PCF network element may indicate configuration data used to perform the ranging/sidelink positioning service, specifically may indicate the dedicated parameter and the value thereof.

Alternatively, the configuration data including the dedicated parameter and the value thereof and the value of each common parameter for performing the ranging/sidelink positioning service may be stored in the UDR network element in advance. The PCF network element can obtain the relevant configuration data from the UDR network element.

The dedicated parameter is specially used to perform the ranging/sidelink positioning service. The common parameter is used to perform both the ranging/sidelink positioning service and the ProSe, or to perform both the ranging/sidelink positioning service and the V2X service.

In the present embodiment, in the case where the capability information indicates that the UE supports the ranging/sidelink positioning and supports the ProSe is received from the AMF network element, the PCF network element can determine the dedicated parameter and the corresponding parameter value included in the ranging/sidelink positioning policy for the UE according to the local policy of the PCF network element or the information received from the UDR network element, and determine the common parameter included in the ranging/sidelink positioning policy for the UE according to the parameter included in the ProSe policy for the UE and obtain the parameter value of each common parameter from the UDR.

Alternatively, in the case where the UE policy container including the ranging/sidelink positioning policy provision request and the ProSe policy provision request is received from the UE, the PCF network element can determine the dedicated parameter and the corresponding parameter value included in the ranging/sidelink positioning policy for the UE according to the local policy of the PCF network element or the information received from the UDR network element, and determine the common parameter included in the ranging/sidelink positioning policy for the UE according to the parameter included in the ProSe policy for the UE and obtain the parameter value of each common parameter from the UDR.

Alternatively, in the case where the capability information indicates that the UE supports the ranging/sidelink positioning and supports the ProSe is received from the AMF network element and the UE policy container including the ranging/sidelink positioning policy provision request is received from the UE, the PCF network element can determine the dedicated parameter and the corresponding parameter value included in the ranging/sidelink positioning policy for the UE according to the local policy of the PCF network element or the information received from the UDR network element, and determine the common parameter included in the ranging/sidelink positioning policy for the UE according to the parameter included in the ProSe policy for the UE and obtain the parameter value of each common parameter from the UDR.

FIG. 5 is a flowchart of a method for determining a ranging/sidelink positioning policy according to an embodiment of the present invention. In the present embodiment, the method is performed by the PCF network element, and the method is suitable to the policy-related information in Cases 2, 5 and 8. As shown in FIG. 5, the method for determining the ranging/sidelink positioning includes the following steps.

In block S501, the dedicated parameter and a corresponding parameter value included in the ranging/sidelink positioning policy are determined according to a local policy of the PCF network element or information received from a UDR network element.

In block S502, a parameter and a value of the parameter included in the V2X policy for the UE are determined as the common parameter and a corresponding parameter value included in the ranging/sidelink positioning policy, respectively.

The local policy may be configured for the PCF network element in advance, and the local policy of the PCF network element may indicate configuration data used to perform the ranging/sidelink positioning service, specifically may indicate the dedicated parameter and the value thereof.

Alternatively, the configuration data including the dedicated parameter and the value thereof and the value of each common parameter for performing the ranging/sidelink positioning service may be stored in the UDR network element in advance. The PCF network element can obtain the relevant configuration data from the UDR network element.

The dedicated parameter is specially used to perform the ranging/sidelink positioning service. The common parameter is used to perform both the ranging/sidelink positioning service and the ProSe, or to perform both the ranging/sidelink positioning service and the V2X service.

In the present embodiment, in the case where the capability information indicates that the UE supports the ranging/sidelink positioning and supports the V2X is received from the AMF network element, the PCF network element can determine the dedicated parameter and the corresponding parameter value included in the ranging/sidelink positioning policy for the UE according to the local policy of the PCF network element or the information received from the UDR network element, and determine the common parameter and the corresponding parameter value included in the ranging/sidelink positioning policy for the UE according to the parameter and the value of the parameter included in the V2X policy for the UE.

Alternatively, in the case where the UE policy container including the ranging/sidelink positioning policy provision request and the V2X policy provision request is received from the UE, the PCF network element can determine the dedicated parameter and the corresponding parameter value included in the ranging/sidelink positioning policy for the UE according to the local policy of the PCF network element or the information received from the UDR network element, and determine the common parameter and the corresponding parameter value included in the ranging/sidelink positioning policy for the UE according to the parameter and the value of the parameter included in the V2X policy for the UE.

Alternatively, in the case where the capability information indicates that the UE supports the ranging/sidelink positioning and supports the V2X is received from the AMF network element and the UE policy container including the ranging/sidelink positioning policy provision request is received from the UE, the PCF network element can determine the dedicated parameter and the corresponding parameter value included in the ranging/sidelink positioning policy for the UE according to the local policy of the PCF network element or the information received from the UDR network element, and determine the common parameter and the corresponding parameter value included in the ranging/sidelink positioning policy for the UE according to the parameter and the value of the parameter included in the V2X policy for the UE.

FIG. 6 is a flowchart of a method for determining a ranging/sidelink positioning policy according to an embodiment of the present invention. In the present embodiment, the method is performed by the PCF network element, and the method is suitable to the policy-related information in Cases 2, 5 and 8. As shown in FIG. 6, the method for determining the ranging/sidelink positioning includes the following steps.

In block S601, the dedicated parameter and a corresponding parameter value included in the ranging/sidelink positioning policy are determined according to a local policy of the PCF network element or information received from a UDR network element.

In block S602, a parameter included in the V2X policy for the UE is determined as the common parameter included in the ranging/sidelink positioning policy, and a parameter value of each common parameter is obtained from the UDR.

The local policy may be configured for the PCF network element in advance, and the local policy of the PCF network element may indicate configuration data used to perform the ranging/sidelink positioning service, specifically may indicate the dedicated parameter and the value thereof.

Alternatively, the configuration data including the dedicated parameter and the value thereof and the value of each common parameter for performing the ranging/sidelink positioning service may be stored in the UDR network element in advance. The PCF network element can obtain the relevant configuration data from the UDR network element.

The dedicated parameter is specially used to perform the ranging/sidelink positioning service. The common parameter is used to perform both the ranging/sidelink positioning service and the ProSe, or to perform both the ranging/sidelink positioning service and the V2X service.

In the present embodiment, in the case where the capability information indicates that the UE supports the ranging/sidelink positioning and supports the V2X is received from the AMF network element, the PCF network element can determine the dedicated parameter and the corresponding parameter value included in the ranging/sidelink positioning policy for the UE according to the local policy of the PCF network element or the information received from the UDR network element, and determine the common parameter included in the ranging/sidelink positioning policy for the UE according to the parameter included in the V2X policy for the UE and obtain the parameter value of each common parameter from the UDR.

Alternatively, in the case where the UE policy container including the ranging/sidelink positioning policy provision request and the V2X policy provision request is received from the UE, the PCF network element can determine the dedicated parameter and the corresponding parameter value included in the ranging/sidelink positioning policy for the UE according to the local policy of the PCF network element or the information received from the UDR network element, and determine the common parameter included in the ranging/sidelink positioning policy for the UE according to the parameter included in the V2X policy for the UE and obtain the parameter value of each common parameter from the UDR.

Alternatively, in the case where the capability information indicates that the UE supports the ranging/sidelink positioning and supports the V2X is received from the AMF network element and the UE policy container including the ranging/sidelink positioning policy provision request is received from the UE, the PCF network element can determine the dedicated parameter and the corresponding parameter value included in the ranging/sidelink positioning policy for the UE according to the local policy of the PCF network element or the information received from the UDR network element, and determine the common parameter included in the ranging/sidelink positioning policy for the UE according to the parameter included in the V2X policy for the UE and obtain the parameter value of each common parameter from the UDR.

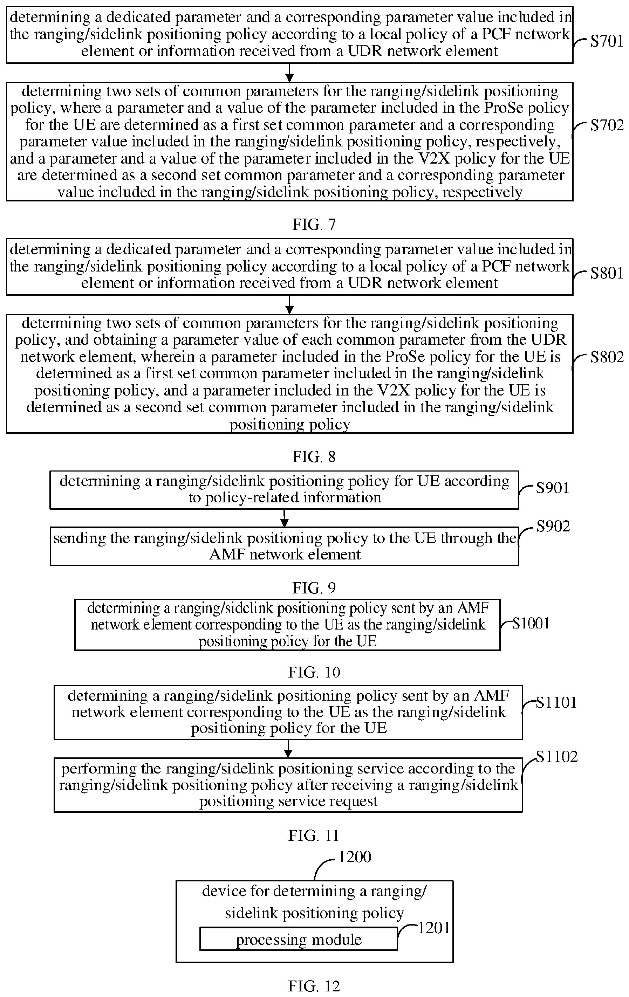

FIG. 7 is a flowchart of a method for determining a ranging/sidelink positioning policy according to an embodiment of the present invention. In the present embodiment, the method is performed by the PCF network element, and the method is suitable to the policy-related information in Cases 3, 6 and 9. As shown in FIG. 7, the method for determining the ranging/sidelink positioning includes the following steps.

In block S701, the dedicated parameter and a corresponding parameter value included in the ranging/sidelink positioning policy are determined according to a local policy of the PCF network element or information received from a UDR network element.

In block S702, two sets of common parameters are determined for the ranging/sidelink positioning policy, where a parameter and a value of the parameter included in the ProSe policy for the UE are determined as a first set common parameter and a corresponding parameter value included in the ranging/sidelink positioning policy, respectively, and a parameter and a value of the parameter included in the V2X policy for the UE are determined as a second set common parameter and a corresponding parameter value included in the ranging/sidelink positioning policy, respectively.

The local policy may be configured for the PCF network element in advance, and the local policy of the PCF network element may indicate configuration data used to perform the ranging/sidelink positioning service, specifically may indicate the dedicated parameter and the value thereof.

Alternatively, the configuration data including the dedicated parameter and the value thereof and the value of each common parameter for performing the ranging/sidelink positioning service may be stored in the UDR network element in advance. The PCF network element can obtain the relevant configuration data from the UDR network element.

The dedicated parameter is specially used to perform the ranging/sidelink positioning service. The common parameter is used to perform both the ranging/sidelink positioning service and the ProSe, or to perform both the ranging/sidelink positioning service and the V2X service.

In the present embodiment, in the case where the capability information indicates that the UE supports the ranging/sidelink positioning, the ProSe and the V2X is received from the AMF network element, the PCF network element can determine the dedicated parameter and the corresponding parameter value included in the ranging/sidelink positioning policy for the UE according to the local policy of the PCF network element or the information received from the UDR network element, determine the first set common parameter and the corresponding parameter value included in the ranging/sidelink positioning policy for the UE according to the parameter and the value of the parameter included in the ProSe policy for the UE, and determine the second set common parameter and the corresponding parameter value included in the ranging/sidelink positioning policy for the UE according to the parameter and the value of the parameter included in the V2X policy for the UE.

Alternatively, in the case where the UE policy container including the ranging/sidelink positioning policy provision request, the ProSe policy provision request and the V2X policy provision request is received from the UE, the PCF network element can determine the dedicated parameter and the corresponding parameter value included in the ranging/sidelink positioning policy for the UE according to the local policy of the PCF network element or the information received from the UDR network element, determine the first set common parameter and the corresponding parameter value included in the ranging/sidelink positioning policy for the UE according to the parameter and the value of the parameter included in the ProSe policy for the UE, and determine the second set common parameter and the corresponding parameter value included in the ranging/sidelink positioning policy for the UE according to the parameter and the value of the parameter included in the V2X policy for the UE.

Alternatively, in the case where the capability information indicates that the UE supports the ranging/sidelink positioning, the ProSe and the V2X is received from the AMF network element and the UE policy container including the ranging/sidelink positioning policy provision request is received from the UE, the PCF network element can determine the dedicated parameter and the corresponding parameter value included in the ranging/sidelink positioning policy for the UE according to the local policy of the PCF network element or the information received from the UDR network element, determine the first set common parameter and the corresponding parameter value included in the ranging/sidelink positioning policy for the UE according to the parameter and the value of the parameter included in the ProSe policy for the UE, and determine the second set common parameter and the corresponding parameter value included in the ranging/sidelink positioning policy for the UE according to the parameter and the value of the parameter included in the V2X policy for the UE.

FIG. 8 is a flowchart of a method for determining a ranging/sidelink positioning policy according to an embodiment of the present invention. In the present embodiment, the method is performed by the PCF network element, and the method is suitable to the policy-related information in Cases 3, 6 and 9. As shown in FIG. 8, the method for determining the ranging/sidelink positioning includes the following steps.

In block S801, the dedicated parameter and a corresponding parameter value included in the ranging/sidelink positioning policy are determined according to a local policy of the PCF network element or information received from a UDR network element.

In block S802, two sets of common parameters are determined for the ranging/sidelink positioning policy, and a parameter value of each common parameter is obtained from the UDR network element, where a parameter included in the ProSe policy for the UE is determined as a first set common parameter included in the ranging/sidelink positioning policy, and a parameter included in the V2X policy for the UE is determined as a second set common parameter included in the ranging/sidelink positioning policy.

The local policy may be configured for the PCF network element in advance, and the local policy of the PCF network element may indicate configuration data used to perform the ranging/sidelink positioning service, specifically may indicate the dedicated parameter and the value thereof.

Alternatively, the configuration data including the dedicated parameter and the value thereof and the value of each common parameter for performing the ranging/sidelink positioning service may be stored in the UDR network element in advance. The PCF network element can obtain the relevant configuration data from the UDR network element.

The dedicated parameter is specially used to perform the ranging/sidelink positioning service. The common parameter is used to perform both the ranging/sidelink positioning service and the ProSe, or to perform both the ranging/sidelink positioning service and the V2X service.

In the present embodiment, in the case where the capability information indicates that the UE supports the ranging/sidelink positioning, the ProSe and the V2X is received from the AMF network element, the PCF network element can determine the dedicated parameter and the corresponding parameter value included in the ranging/sidelink positioning policy for the UE according to the local policy of the PCF network element or the information received from the UDR network element, determine the first set common parameter included in the ranging/sidelink positioning policy for the UE according to the parameter included in the ProSe policy for the UE and obtain a parameter value of each common parameter from the UDR network element, and determine the second set common parameter included in the ranging/sidelink positioning policy for the UE according to the parameter included in the V2X policy for the UE and obtain a parameter value of each common parameter from the UDR network element.

Alternatively, in the case where the UE policy container including the ranging/sidelink positioning policy provision request, the ProSe policy provision request and the V2X policy provision request is received from the UE, the PCF network element can determine the dedicated parameter and the corresponding parameter value included in the ranging/sidelink positioning policy for the UE according to the local policy of the PCF network element or the information received from the UDR network element, determine the first set common parameter included in the ranging/sidelink positioning policy for the UE according to the parameter included in the ProSe policy for the UE and obtain a parameter value of each common parameter from the UDR network element, and determine the second set common parameter included in the ranging/sidelink positioning policy for the UE according to the parameter included in the V2X policy for the UE and obtain a parameter value of each common parameter from the UDR network element.

Alternatively, in the case where the capability information indicates that the UE supports the ranging/sidelink positioning, the ProSe and the V2X is received from the AMF network element and the UE policy container including the ranging/sidelink positioning policy provision request is received from the UE, the PCF network element can determine the dedicated parameter and the corresponding parameter value included in the ranging/sidelink positioning policy for the UE according to the local policy of the PCF network element or the information received from the UDR network element, determine the first set common parameter included in the ranging/sidelink positioning policy for the UE according to the parameter included in the ProSe policy for the UE and obtain a parameter value of each common parameter from the UDR network element, and determine the second set common parameter included in the ranging/sidelink positioning policy for the UE according to the parameter included in the V2X policy for the UE and obtain a parameter value of each common parameter from the UDR network element.

According to the method for determining the ranging/sidelink positioning policy of the embodiments of the present invention, the PCF network element determines, based on the local policy of the PCF network element or the information obtained from the UDR network element, the ranging/sidelink positioning policy for the UE according to the capability information received from the AMF network element and/or the policy provision request included in the UE measurement container from the UE, and the ranging/sidelink positioning policy includes the configuration data used to perform the ranging/sidelink positioning service, thus filling the technical gap in the existing technology on how to determine and provide the configuration data for performing the ranging/sidelink positioning service to the UE.

The present invention provides further embodiments for determining the ranging/sidelink positioning policy.

FIG. 9 is a flowchart of a method for determining a ranging/sidelink positioning policy according to an embodiment of the present invention. In the present embodiment, the method is performed by the PCF network element. Based on the embodiment described in FIG. 1, as shown in FIG. 9, the method for determining the ranging/sidelink positioning policy includes the following steps.

In block S901, a ranging/sidelink positioning policy for a UE is determined according to policy-related information.

The ranging/sidelink positioning policy includes a parameter required to perform a ranging/sidelink positioning service.

The policy-related information includes at least one of: capability information received from an AMF network element corresponding to the UE, where the capability information indicates that the UE at least supports ranging/sidelink positioning, or a policy provision request included in a UE policy container received from the UE, where the policy provision request at least includes a ranging/sidelink positioning policy provision request for requesting the ranging/sidelink positioning policy.

For specific details of the step in block S901, reference may be made to the relevant details and description of block S101.

In block S902, the ranging/sidelink positioning policy is sent to the UE through the AMF network element.

After determining the ranging/sidelink positioning policy, the PCF network element sends the ranging/sidelink positioning policy to the AMF network element, and the AMF network element sends the ranging/sidelink positioning policy to the UE through unvarnished transmission..

In some embodiments, the ranging/sidelink positioning policy includes a dedicated parameter for the ranging/sidelink positioning service and a common parameter (also called a "shared parameter") for both the ranging/sidelink positioning service and at least one of a ProSe or a V2X service.

The ranging/sidelink positioning policy includes the configuration data for performing the ranging/sidelink positioning service. Specifically, the ranging/sidelink positioning policy may include the dedicated parameter(s) and the common parameter(s). The dedicated parameter is specially used to perform the ranging/sidelink positioning service. The common parameter is used to perform both the ranging/sidelink positioning service and the ProSe, or to perform both the ranging/sidelink positioning service and the V2X service.

According to the method for determining the ranging/sidelink positioning policy of the embodiments of the present invention, the PCF network element determines the ranging/sidelink positioning policy for the UE according to the capability information received from the AMF network element and/or the policy provision request included in the UE measurement container from the UE and sends the ranging/sidelink positioning policy to the UE, and the ranging/sidelink positioning policy includes the configuration data used to perform the ranging/sidelink positioning service, thus filling the technical gap in the existing technology on how to determine and provide the configuration data for performing the ranging/sidelink positioning service to the UE.

The embodiment shown in FIG. 9 of the present invention is based on the embodiment shown in FIG. 1. Although it is not explicitly shown in the present invention, it should be understood that the step in block S902 in the embodiment shown in FIG. 9 can also be combined with the embodiments shown in FIG. 2 to FIG. 8, the ranging/sidelink positioning policy determined according to the embodiments shown in FIG. 2 to FIG. 8 is sent to the UE through the AMF network element.

In some embodiments, the dedicated parameter described in the above embodiments includes: a destination layer-2 identifier, a parameter for proximity communication 5 (PC5) radio access technology (RAT) selection and PC5 transmission configuration selection, a parameter related to privacy, a parameter about when long term evolution (LTE) PC5 is selected, a parameter about when new ratio (NR) PC5 is selected, and a dedicated authorization policy parameter.

The destination layer-2 identifier is for sending and receiving initial signaling of a discovery message.

The parameter for the PC5 RAT selection and the PC5 transmission configuration selection may indicate mapping of a V2X service type to the PC5 RAT (for LTE PC5, to the corresponding transmission configuration; for NR PC5, to the corresponding NR transmission configuration for broadcast and groupcast).

The parameter related to privacy may include: a list of V2X service types with a geographical area that requires privacy support, a privacy timer value indicating a duration after which the UE should change each source layer-2 identifier self-assigned by the UE when privacy is required.

The parameter when LTE PC5 is selected may be referred to a parameter described in *TS 23.285.*

The parameter when NR PC5 is selected may indicate mapping of a V2X service type to a V2X frequency, mapping of a V2X service type to a default mode (such as broadcast mode, groupcast mode or unicast mode) of communication, mapping of a V2X service type to a destination layer-2 identifier for broadcast, mapping of a V2X service type to a destination layer-2 identifier for groupcast mode communication, mapping of a V2X service type to a destination layer-2 identifier for initial signalling to establish unicast connection.

In some embodiments, when the UE is served by a next generation radio access network (NG-RAN) or by an evolved UMTS terrestrial radio access network (E-UTRAN) (UMTS refers to universal mobile telecommunication system), the dedicated authorization policy parameter includes at least one of: for the UE that supports the ranging/sidelink positioning, at least one public land mobile network (PLMN) in which the UE is authorized as a reference UE or a target UE to perform the ranging/sidelink positioning service; for the UE that supports the ranging/sidelink positioning, at least one PLMN in which the UE is authorized to perform a regular ranging/sidelink positioning service to obtain a relevant distance; for the UE that supports the ranging/sidelink positioning, at least one PLMN in which the UE is authorized to perform a regular ranging/sidelink positioning service to obtain a relevant direction; for the UE that supports the ranging/sidelink positioning, at least one PLMN in which the UE is authorized to perform a high-accuracy ranging/sidelink positioning service to obtain a relevant distance; or for the UE that supports the ranging/sidelink positioning, at least one PLMN in which the UE is authorized to perform a high-accuracy ranging/sidelink positioning service to obtain a relevant direction.

In some embodiments, when the UE is not served by the NG-RAN and is not served by the E-UTRAN, the dedicated authorization policy parameter includes at least one of: for the UE that supports the ranging/sidelink positioning, whether the UE is authorized as the reference UE or the target UE to perform the ranging/sidelink positioning service; for the UE that supports the ranging/sidelink positioning, whether the UE is authorized to perform a regular ranging/sidelink positioning service to obtain a relevant distance; for the UE that supports the ranging/sidelink positioning, whether the UE is authorized to perform a regular ranging/sidelink positioning service to obtain a relevant direction; for the UE that supports the ranging/sidelink positioning, whether the UE is authorized to perform a high-accuracy ranging/sidelink positioning service to obtain a relevant distance; or for the UE that supports the ranging/sidelink positioning, whether the UE is authorized to perform a high-accuracy ranging/sidelink positioning service to obtain a relevant direction.

Based on different quality of service (QoS) requirements, it can be determined whether to perform the regular ranging/sidelink positioning service or the high-accuracy ranging/sidelink positioning service.

In some embodiments, the common parameter mentioned in any embodiment of FIG. 1 to FIG. 9 includes a common authorization policy parameter, a radio parameter, a restricted ProSe discovery UE identifier parameter, a group member discovery parameter, a validity timing parameter, and a groupcast mode ProSe direct communication parameter.

The common authorization policy parameter include at least one of: when the UE is served by the NR-RAN, for open 5G ProSe direct discovery, at least one PLMN in which the UE is authorized to perform 5G ProSe direct discovery monitoring, or at least one PLMN in which the UE is authorized to perform announcing; or for restricted 5G ProSe direct discovery, at least one PLMN in which the UE is authorized to perform restricted 5G ProSe direct discovery Model A monitoring, at least one PLMN in which the UE is authorized to perform restricted 5G ProSe Direct Discovery Model A announcing, or at least one PLMN in which the UE is authorized to perform a Model B discovery operation.

The radio parameter may include a radio parameter when the UE is not served by the NR-RAN and a radio parameter when the UE is not served by the E-UTRA and is not served by the NR.

The radio parameter when the UE is not served by the NR-RAN may include a radio parameter per NR PC5, and an indication of whether the radio parameter is operator managed or non-operator managed.

The radio parameter when the UE is not served by E-UTRA and not served by the NR may include a radio parameter per PC5 RAT (such as LTE PC5, or NR PC5), and an indication of whether the radio parameter is operator managed or non-operator managed.

The restricted ProSe discovery UE identifier (ID) parameter is a ProSe discovery UE ID used for restricted direct discovery.

The group member discovery parameter may include an application layer group ID, a layer 2 group ID, and a user information ID.

FIG. 10 is a flowchart of a method for determining a ranging/sidelink positioning policy according to another embodiment of the present invention. In the present embodiment, the method is performed by the UE, and as shown in FIG. 10, the method for determining the ranging/sidelink positioning policy includes the following step.

In block S1001, a ranging/sidelink positioning policy sent by an AMF network element corresponding to the UE is determined as the ranging/sidelink positioning policy for the UE.

The ranging/sidelink positioning policy includes a parameter required to perform a ranging/sidelink positioning service.

The ranging/sidelink positioning policy may be determined by a PCF network element according to policy-related information.

The policy-related information includes at least one of: capability information received from an access and mobility management function (AMF) network element corresponding to the UE, where the capability information indicates that the UE at least supports ranging/sidelink positioning, or a policy provision request included in a UE policy container received from the UE, where the policy provision request at least includes a ranging/sidelink positioning policy provision request for requesting the ranging/sidelink positioning policy.

In the case that the capability information indicating that the UE at least supports the ranging/sidelink positioning is received from the AMF network element, the PCF network element can determine the ranging/sidelink positioning policy for the UE. Alternatively, upon receiving from the UE the UE policy container at least including the ranging/sidelink positioning policy provision request, the PCF network element can determine the ranging/sidelink positioning policy for the UE. Alternatively, in the case where the capability information indicating that the UE at least supports the ranging/sidelink positioning is received from the AMF network element and the UE policy container at least including the ranging/sidelink positioning policy provision request is received from the UE, the PCF network element can determine the ranging/sidelink positioning policy for the UE.

After the ranging/sidelink positioning policy is determined, the PCF network element sends the ranging/sidelink positioning policy to the AMF network element, and the AMF network element sends the ranging/sidelink positioning policy to the UE through unvarnished transmission.

In some embodiments, the ranging/sidelink positioning policy includes a dedicated parameter for the ranging/sidelink positioning service and a common parameter (also called a "shared parameter") for both the ranging/sidelink positioning service and at least one of a ProSe or a V2X service.

The ranging/sidelink positioning policy includes the configuration data for performing the ranging/sidelink positioning service. Specifically, the ranging/sidelink positioning policy may include the dedicated parameter(s) and the common parameter(s). The dedicated parameter is specially used to perform the ranging/sidelink positioning service. The common parameter is used to perform both the ranging/sidelink positioning service and the ProSe, or to perform both the ranging/sidelink positioning service and the V2X service.

According to the method for determining the ranging/sidelink positioning policy of the embodiments of the present invention, the UE receives the ranging/sidelink positioning policy from the AMF network element and uses it as the ranging/sidelink positioning policy for the UE, and the ranging/sidelink positioning policy includes the configuration data used to perform the ranging/sidelink positioning service, thus filling the technical gap in the existing technology on how to determine and provide the configuration data for performing the ranging/sidelink positioning service to the UE.

FIG. 11 is a flowchart of a method for determining a ranging/sidelink positioning policy according to another embodiment of the present invention. In the present embodiment, the method is performed by the UE, and as shown in FIG. 11, the method for determining the ranging/sidelink positioning policy includes the following step.

In block S1101, a ranging/sidelink positioning policy sent by an AMF network element corresponding to the UE is determined as the ranging/sidelink positioning policy for the UE.

The ranging/sidelink positioning policy includes a parameter required to perform a ranging/sidelink positioning service.

For specific details of S1101, reference may be made to the relevant details and description of S1001.

In block S1102, the ranging/sidelink positioning service is performed according to the ranging/sidelink positioning policy after a ranging/sidelink positioning service request is received.

According to the method for determining the ranging/sidelink positioning policy of the embodiments of the present invention, the UE receives the ranging/sidelink positioning policy from the AMF network element and uses it as the ranging/sidelink positioning policy for the UE, the UE can perform the ranging/sidelink positioning service according to the ranging/sidelink positioning policy, and the ranging/sidelink positioning policy includes the configuration data used to perform the ranging/sidelink positioning service, thus filling the technical gap in the existing technology on how to determine and provide the configuration data for performing the ranging/sidelink positioning service to the UE.

In some embodiments, the dedicated parameter described in the above embodiments includes: a destination layer-2 identifier, a parameter for PC5 RAT selection and PC5 transmission configuration selection, a parameter related to privacy, a parameter about when LTE PC5 is selected, a parameter about when NR PC5 is selected, and a dedicated authorization policy parameter.

The destination layer-2 identifier is for sending and receiving initial signaling of a discovery message.

The parameter for the PC5 RAT selection and the PC5 transmission configuration selection may indicate mapping of a V2X service type to the PC5 RAT (for LTE PC5, to the corresponding transmission configuration; for NR PC5, to the corresponding NR transmission configuration for broadcast and groupcast).

The parameter related to privacy may include: a list of V2X service types with a geographical area that requires privacy support, a privacy timer value indicating a duration after which the UE should change each source layer-2 identifier self-assigned by the UE when privacy is required.

The parameter when LTE PC5 is selected may be referred to a parameter described in *TS 23.285.*

The parameter when NR PC5 is selected may indicate mapping of a V2X service type to a V2X frequency, mapping of a V2X service type to a default mode (such as broadcast mode, groupcast mode or unicast mode) of communication, mapping of a V2X service type to a destination layer-2 identifier for broadcast, mapping of a V2X service type to a destination layer-2 identifier for groupcast mode communication, mapping of a V2X service type to a destination layer-2 identifier for initial signalling to establish unicast connection.

In some embodiments, when the UE is served by NG-RAN or by E-UTRAN, the dedicated authorization policy parameter includes at least one of: for the UE that supports the ranging/sidelink positioning, at least one PLMN in which the UE is authorized as a reference UE or a target UE to perform the ranging/sidelink positioning service; for the UE that supports the ranging/sidelink positioning, at least one PLMN in which the UE is authorized to perform a regular ranging/sidelink positioning service to obtain a relevant distance; for the UE that supports the ranging/sidelink positioning, at least one PLMN in which the UE is authorized to perform a regular ranging/sidelink positioning service to obtain a relevant direction; for the UE that supports the ranging/sidelink positioning, at least one PLMN in which the UE is authorized to perform a high-accuracy ranging/sidelink positioning service to obtain a relevant distance; or for the UE that supports the ranging/sidelink positioning, at least one PLMN in which the UE is authorized to perform a high-accuracy ranging/sidelink positioning service to obtain a relevant direction.

In some embodiments, when the UE is not served by the NG-RAN and is not served by the E-UTRAN, the dedicated authorization policy parameter includes at least one of: for the UE that supports the ranging/sidelink positioning, whether the UE is authorized as the reference UE or the target UE to perform the ranging/sidelink positioning service; for the UE that supports the ranging/sidelink positioning, whether the UE is authorized to perform a regular ranging/sidelink positioning service to obtain a relevant distance; for the UE that supports the ranging/sidelink positioning, whether the UE is authorized to perform a regular ranging/sidelink positioning service to obtain a relevant direction; for the UE that supports the ranging/sidelink positioning, whether the UE is authorized to perform a high-accuracy ranging/sidelink positioning service to obtain a relevant distance; or for the UE that supports the ranging/sidelink positioning, whether the UE is authorized to perform a high-accuracy ranging/sidelink positioning service to obtain a relevant direction.

Based on different quality of service (QoS) requirements, it can be determined whether to perform the regular ranging/sidelink positioning service or the high-accuracy ranging/sidelink positioning service.

In some embodiments, the common parameter mentioned in any embodiment of FIG. 1 to FIG. 9 includes a common authorization policy parameter, a radio parameter, a restricted ProSe discovery UE identifier parameter, a group member discovery parameter, a validity timing parameter, and a groupcast mode ProSe direct communication parameter.

The common authorization policy parameter include at least one of: when the UE is served by the NR-RAN, for open 5G ProSe direct discovery, at least one PLMN in which the UE is authorized to perform 5G ProSe direct discovery monitoring, or at least one PLMN in which the UE is authorized to perform announcing; or for restricted 5G ProSe direct discovery, at least one PLMN in which the UE is authorized to perform restricted 5G ProSe direct discovery Model A monitoring, at least one PLMN in which the UE is authorized to perform restricted 5G ProSe Direct Discovery Model A announcing, or at least one PLMN in which the UE is authorized to perform a Model B discovery operation.

The radio parameter may include a radio parameter when the UE is not served by the NR-RAN and a radio parameter when the UE is not served by the E-UTRA and is not served by the NR.

The radio parameter when the UE is not served by the NR-RAN may include a radio parameter per NR PC5, and an indication of whether the radio parameter is operator managed or non-operator managed.

The radio parameter when the UE is not served by E-UTRA and not served by the NR may include a radio parameter per PC5 RAT (such as LTE PC5, or NR PC5), and an indication of whether the radio parameter is operator managed or non-operator managed.

The restricted ProSe discovery UE identifier (ID) parameter is a ProSe discovery UE ID used for restricted direct discovery.

The group member discovery parameter may include an application layer group ID, a layer 2 group ID, and a user information ID.

Corresponding to the method for determining the ranging/sidelink positioning policy provided by the above embodiments, the present invention further provides a device for determining a ranging/sidelink positioning policy. Since the device for determining the ranging/sidelink positioning policy provided by embodiments of the present invention corresponds the method for determining the ranging/sidelink positioning policy provided by the above embodiments, implementations of the method for determining the ranging/sidelink positioning policy are also applicable to the device for determining the ranging/sidelink positioning policy provided by the embodiments, which are not described in detail in these embodiments.

FIG. 12 is a block diagram of a device for determining a ranging/sidelink positioning policy according to an embodiment of the present invention. This device is applied to a PCF network elements

As shown in FIG. 12, the device 1200 for determining the ranging/sidelink positioning policy includes a processing module 1201.

The processing module 1201 is configured to determine a ranging/sidelink positioning policy for a user equipment (UE) according to policy-related information, where the ranging/sidelink positioning policy includes a parameter required to perform a ranging/sidelink positioning service.

The policy-related information includes at least one of: capability information received from an access and mobility management function (AMF) network element corresponding to the UE, where the capability information indicates that the UE at least supports ranging/sidelink positioning, or a policy provision request included in a UE policy container received from the UE, where the policy provision request at least includes a ranging/sidelink positioning policy provision request for requesting the ranging/sidelink positioning policy.

According to the method for determining the ranging/sidelink positioning policy of the embodiments of the present invention, the PCF network element determines the ranging/sidelink positioning policy for the UE according to the capability information received from the AMF network element and/or the policy provision request included in the UE measurement container from the UE, and the ranging/sidelink positioning policy includes the configuration data used to perform the ranging/sidelink positioning service, thus filling the technical gap in the existing technology on how to determine and provide the configuration data for performing the ranging/sidelink positioning service to the UE.

In some embodiments, the processing module 1201 is configured to determine, based on a local policy of the PCF network element or information obtained from a UDR network element, the parameter and a corresponding parameter value included in the ranging/sidelink positioning policy.

In some embodiments, the ranging/sidelink positioning policy includes a dedicated parameter for the ranging/sidelink positioning service and a common parameter for both the ranging/sidelink positioning service and at least one of a proximity service (ProSe) and a vehicle to everything (V2X) service.

In some embodiments, in a case that the policy-related information includes the capability information, and the capability information indicates that the UE further supports the ProSe, in a case that the policy-related information includes the policy provision request, and the policy provision request further includes a ProSe policy provision request for requesting a ProSe policy, or in a case that the policy-related information includes the capability information and the policy provision request, and the capability information indicates that the UE further supports the ProSe, determining the ranging/sidelink positioning policy for the UE includes: determining the dedicated parameter and a corresponding parameter value included in the ranging/sidelink positioning policy according to a local policy of the PCF network element or information received from a UDR network element, and determining a parameter and a value of the parameter included in the ProSe policy for the UE as the common parameter and a corresponding parameter value included in the ranging/sidelink positioning policy, respectively.

In some embodiments, in a case that the policy-related information includes the capability information, and the capability information indicates that the UE further supports the ProSe, in a case that the policy-related information includes the policy provision request, and the policy provision request further includes a ProSe policy provision request for requesting a ProSe policy, or in a case that the policy-related information includes the capability information and the policy provision request, and the capability information indicates that the UE further supports the ProSe, determining the ranging/sidelink positioning policy for the UE includes: determining the dedicated parameter and a corresponding parameter value included in the ranging/sidelink positioning policy according to a local policy of the PCF network element or information received from a UDR network element, and determining a parameter included in the ProSe policy for the UE as the common parameter included in the ranging/sidelink positioning policy, and obtaining a parameter value of each common parameter from the UDR.

In some embodiments, in a case that the policy-related information includes the capability information, and the capability information indicates that the UE further supports the V2X, in a case that the policy-related information includes the policy provision request, and the policy provision request further includes a V2X policy provision request for requesting a V2X policy, or in a case that the policy-related information includes the capability information and the policy provision request, and the capability information indicates that the UE further supports the V2X, determining the ranging/sidelink positioning policy for the UE includes: determining the dedicated parameter and a corresponding parameter value included in the ranging/sidelink positioning policy according to a local policy of the PCF network element or information received from a UDR network element, and determining a parameter and a value of the parameter included in the V2X policy for the UE as the common parameter and a corresponding parameter value included in the ranging/sidelink positioning policy, respectively.

In some embodiments, in a case that the policy-related information includes the capability information, and the capability information indicates that the UE further supports the V2X, in a case that the policy-related information includes the policy provision request, and the policy provision request further includes a V2X policy provision request for requesting a V2X policy, or in a case that the policy-related information includes the capability information and the policy provision request, and the capability information indicates that the UE further supports the V2X, determining the ranging/sidelink positioning policy for the UE includes: determining the dedicated parameter and a corresponding parameter value included in the ranging/sidelink positioning policy according to a local policy of the PCF network element or information received from a UDR network element, and determining a parameter included in the V2X policy for the UE as the common parameter included in the ranging/sidelink positioning policy, and obtaining a parameter value of each common parameter from the UDR network element.

In some embodiments, in a case that the policy-related information includes the capability information, and the capability information indicates that the UE further supports the ProSe and the V2X, in a case that the policy-related information includes the policy provision request, and the policy provision request further includes a ProSe policy provision request for requesting a ProSe policy and a V2X policy provision request for requesting a V2X policy, or in a case that the policy-related information includes the capability information and the policy provision request, and the capability information indicates that the UE further supports the ProSe and the V2X, determining the ranging/sidelink positioning policy for the UE includes: determining the dedicated parameter and a corresponding parameter value included in the ranging/sidelink positioning policy according to a local policy of the PCF network element or information received from a UDR network element, and determining two sets of common parameters for the ranging/sidelink positioning policy, where a parameter and a value of the parameter included in the ProSe policy for the UE are determined as a first set common parameter and a corresponding parameter value included in the ranging/sidelink positioning policy, respectively, and a parameter and a value of the parameter included in the V2X policy for the UE are determined as a second set common parameter and a corresponding parameter value included in the ranging/sidelink positioning policy, respectively.

In some embodiments, in a case that the policy-related information includes the capability information, and the capability information indicates that the UE further supports the ProSe and the V2X, in a case that the policy-related information includes the policy provision request, and the policy provision request further includes a ProSe policy provision request for requesting a ProSe policy and a V2X policy provision request for requesting a V2X policy, or in a case that the policy-related information includes the capability information and the policy provision request, and the capability information indicates that the UE further supports the ProSe and the V2X, determining the ranging/sidelink positioning policy for the UE includes: determining the dedicated parameter and a corresponding parameter value included in the ranging/sidelink positioning policy according to a local policy of the PCF network element or information received from a UDR network element, and determining two sets of common parameters for the ranging/sidelink positioning policy, and obtaining a parameter value of each common parameter from the UDR network element, where a parameter included in the ProSe policy for the UE is determined as a first set common parameter included in the ranging/sidelink positioning policy, and a parameter included in the V2X policy for the UE is determined as a second set common parameter included in the ranging/sidelink positioning policy.

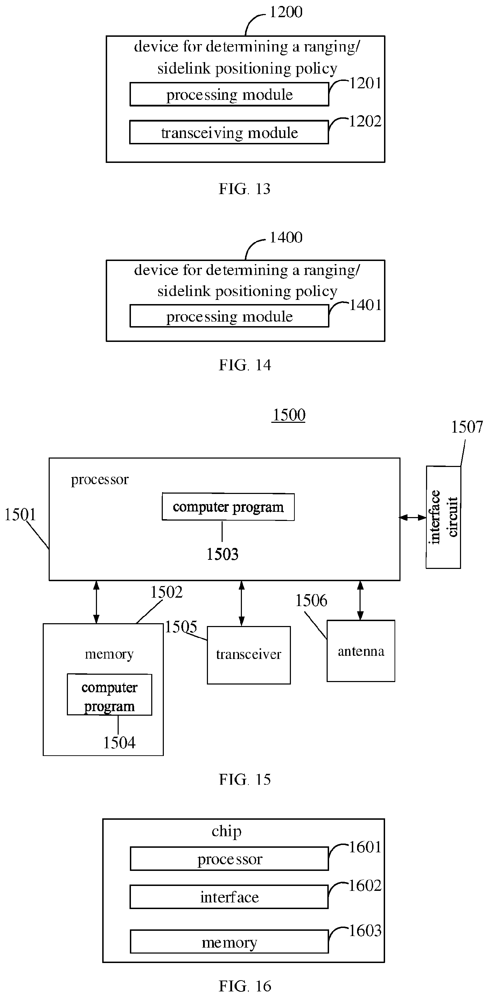

In some embodiments, as shown in FIG. 13, the device 1200 further includes a transceiving module 1202 configured to send the ranging/sidelink positioning policy to the UE through the AMF network element.

In some embodiments, the dedicated parameter includes: a destination layer-2 identifier, a parameter for proximity communication 5 (PC5) radio access technology (RAT) selection and PC5 transmission configuration selection, a parameter related to privacy, a parameter about when long term evolution (LTE) PC5 is selected, a parameter about when new ratio (NR) PC5 is selected, and a dedicated authorization policy parameter. The common parameter includes: a common authorization policy parameter, a radio parameter, a restricted ProSe discovery UE identifier parameter, a group member discovery parameter, a validity timing parameter, a groupcast mode ProSe direct communication parameter.

In some embodiments, in a case that the UE is served by a next generation radio access network (NG-RAN) or by an evolved universal mobile telecommunication system terrestrial radio access network (E-UTRAN), the dedicated authorization policy parameter includes at least one of: for the UE that supports the ranging/sidelink positioning, at least one public land mobile network (PLMN) in which the UE is authorized as a reference UE or a target UE to perform the ranging/sidelink positioning service; for the UE that supports the ranging/sidelink positioning, at least one PLMN in which the UE is authorized to perform a regular ranging/sidelink positioning service to obtain a relevant distance; for the UE that supports the ranging/sidelink positioning, at least one PLMN in which the UE is authorized to perform a regular ranging/sidelink positioning service to obtain a relevant direction; for the UE that supports the ranging/sidelink positioning, at least one PLMN in which the UE is authorized to perform a high-accuracy ranging/sidelink positioning service to obtain a relevant distance; or for the UE that supports the ranging/sidelink positioning, at least one PLMN in which the UE is authorized to perform a high-accuracy ranging/sidelink positioning service to obtain a relevant direction.

In some embodiments, in a case that the UE is not served by a NG-RAN and is not served by an E-UTRAN, the dedicated authorization policy parameter includes at least one of: for the UE that supports the ranging/sidelink positioning, whether the UE is authorized as a reference UE or a target UE to perform the ranging/sidelink positioning service; for the UE that supports the ranging/sidelink positioning, whether the UE is authorized to perform a regular ranging/sidelink positioning service to obtain a relevant distance; for the UE that supports the ranging/sidelink positioning, whether the UE is authorized to perform a regular ranging/sidelink positioning service to obtain a relevant direction; for the UE that supports the ranging/sidelink positioning, whether the UE is authorized to perform a high-accuracy ranging/sidelink positioning service to obtain a relevant distance; or for the UE that supports the ranging/sidelink positioning, whether the UE is authorized to perform a high-accuracy ranging/sidelink positioning service to obtain a relevant direction.

FIG. 14 is a block diagram of a device for determining a ranging/sidelink positioning policy provided by an embodiment of the present invention. The device is applied to the UE.

As shown in FIG. 14, the device 1400 for determining the ranging/sidelink positioning policy includes a processing module 1401. The processing module 1401 is configured to determine a ranging/sidelink positioning policy sent by an AMF network element corresponding to the UE as the ranging/sidelink positioning policy for the UE. The ranging/sidelink positioning policy includes a parameter required to perform a ranging/sidelink positioning service.

According to the method for determining the ranging/sidelink positioning policy of the embodiments of the present invention, the UE receives the ranging/sidelink positioning policy from the AMF network element and uses it as the ranging/sidelink positioning policy for the UE, and the ranging/sidelink positioning policy includes the configuration data used to perform the ranging/sidelink positioning service, thus filling the technical gap in the existing technology on how to determine and provide the configuration data for performing the ranging/sidelink positioning service to the UE.

In some embodiments, the processing module 1401 is further configured to perform the ranging/sidelink positioning service according to the ranging/sidelink positioning policy after receiving a ranging/sidelink positioning service request.

In some embodiments, the ranging/sidelink positioning policy includes a dedicated parameter for the ranging/sidelink positioning service and a common parameter for both the ranging/sidelink positioning service and at least one of a proximity service (ProSe) and a vehicle to everything (V2X) service.

In some embodiments, the dedicated parameter includes: a destination layer-2 identifier, a parameter for proximity communication 5 (PC5) radio access technology (RAT) selection and PC5 transmission configuration selection, a parameter related to privacy, a parameter about when long term evolution (LTE) PC5 is selected, a parameter about when new ratio (NR) PC5 is selected, and a dedicated authorization policy parameter. The common parameter includes: a common authorization policy parameter, a radio parameter, a restricted ProSe discovery UE identifier parameter, a group member discovery parameter, a validity timing parameter, a groupcast mode ProSe direct communication parameter.

In some embodiments, in a case that the UE is served by a next generation radio access network (NG-RAN) or by an evolved universal mobile telecommunication system terrestrial radio access network (E-UTRAN), the dedicated authorization policy parameter includes at least one of: for the UE that supports the ranging/sidelink positioning, at least one public land mobile network (PLMN) in which the UE is authorized as a reference UE or a target UE to perform the ranging/sidelink positioning service; for the UE that supports the ranging/sidelink positioning, at least one PLMN in which the UE is authorized to perform a regular ranging/sidelink positioning service to obtain a relevant distance; for the UE that supports the ranging/sidelink positioning, at least one PLMN in which the UE is authorized to perform a regular ranging/sidelink positioning service to obtain a relevant direction; for the UE that supports the ranging/sidelink positioning, at least one PLMN in which the UE is authorized to perform a high-accuracy ranging/sidelink positioning service to obtain a relevant distance; or for the UE that supports the ranging/sidelink positioning, at least one PLMN in which the UE is authorized to perform a high-accuracy ranging/sidelink positioning service to obtain a relevant direction.

In some embodiments, in a case that the UE is not served by a NG-RAN and is not served by an E-UTRAN, the dedicated authorization policy parameter includes at least one of: for the UE that supports the ranging/sidelink positioning, whether the UE is authorized as a reference UE or a target UE to perform the ranging/sidelink positioning service; for the UE that supports the ranging/sidelink positioning, whether the UE is authorized to perform a regular ranging/sidelink positioning service to obtain a relevant distance; for the UE that supports the ranging/sidelink positioning, whether the UE is authorized to perform a regular ranging/sidelink positioning service to obtain a relevant direction; for the UE that supports the ranging/sidelink positioning, whether the UE is authorized to perform a high-accuracy ranging/sidelink positioning service to obtain a relevant distance; or for the UE that supports the ranging/sidelink positioning, whether the UE is authorized to perform a high-accuracy ranging/sidelink positioning service to obtain a relevant direction.

Embodiments of the present invention provide a communication device and a computer-readable storage medium.

Referring to FIG. 15, FIG. 15 is a block diagram of a communication device 1500 provided by an embodiment of the present invention. The communication device 1500 may be a network device, or may be a user equipment, or may be a chip, a chip system, or a processor that supports the network device to implement the above methods, or may be a chip, a chip system, or a processor that supports the terminal device to implement the above methods. The device may be configured to implement the methods as described in the above method embodiments, and for details, reference may be made to the descriptions in the above method embodiments.

The communications device 1500 may include one or more processors 1501. The processor 1501 may be a general-purpose processor or a special-purpose processor. For example, it may be a baseband processor or a central processing unit. The baseband processor may be configured to process a communication protocol and communication data, and the central processing unit may be configured to control a communication device (such as a base station, a baseband chip, a terminal device, a terminal device chip, a DU or a CU, etc.), execute computer programs, and process data of the computer programs.

Optionally, the communication device 1500 may further include one or more memories 1502 having stored therein a computer program 1504. The processor 1501 executes the computer program 1504, to cause the communication device 1500 to implement the methods as described in the above method embodiments. Optionally, the memory 1502 may have stored therein data. The communication device 1500 and the memory 1502 may be provided separately or integrated together.

Optionally, the communication device 1500 may further include a transceiver 1505 and an antenna 1506. The transceiver 1505 may be called a transceiving element, a transceiving machine, a transceiving circuit or the like, for implementing a transceiving function. The transceiver 1505 may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device 1500 may further include one or more interface circuits 1507. The interface circuit 1507 is configured to receive a code instruction and transmit the code instruction to the processor 1501. The processor 1501 runs the code instruction to enable the communication device 1500 to execute the methods as described in the above method embodiments.

In an implementation, the processor 1501 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation, the processor 1501 may have stored therein a computer program 1503 that, when run on the processor 1501, causes the communication device 1500 to implement the methods as described in the above method embodiments. The computer program 1503 may be embedded in the processor 1501, and in this case, the processor 1501 may be implemented by a hardware.

In an implementation, the communication device 1500 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an N-type metal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device (such as the first terminal device in the foregoing method embodiments), but the scope of the communication device described in the present invention is not limited thereto, and the structure of the communication device may not be limited by FIG. 15. The communication device may be a stand-alone device or may be a part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

For the case where the communication device may be a chip or a chip system, FIG. 16 may be referred to. The chip as shown in FIG. 16 includes a processor 1601 and an interface 1602. In the chip, one or more processors 1601 may be provided, and more than one interface 1602 may be provided.

Optionally, the chip further includes a memory 1603 for storing necessary computer programs and data.

Those skilled in the art may also understand that various illustrative logical blocks and steps listed in embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present invention.

Embodiments of the present invention also provide a system for determining a ranging/sidelink positioning policy. The system includes the communication device as the PCF network element as described in the foregoing method embodiments of FIG. 12 and FIG. 13, the communication device as the UE as described in the foregoing embodiments of FIG. 14, or the system includes the communication device as the network device and the communication device as the UE as described in the foregoing embodiments of FIG. 15.

The present invention further provides a readable storage medium having stored thereon instructions that, when executed by a computer, cause functions of any of the above method embodiments to be implemented.

The present invention further provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or via microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are distinguished for convenience of description, and are not intended to limit the scope of embodiments of the present invention, and nor are they intended to represent sequential order.

Those of ordinary skill in the art can understand that the technical solutions recorded in the embodiments of the present invention may be combined as long as there is no conflict.

The term "at least one" used in the present invention may also be described as one or more, and the term "a plurality of" may cover two, three, four or more, which are not limited in the present invention. In embodiments of the present invention, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

As used in the present invention, terms "machine-readable medium" and "computer-readable medium" refer to any computer program product, device, and/or device (such as magnetic disks, optical disks, memories, programmable logic devices (PLDs)) for providing machine instructions and/or data to the programmable processor, including machine-readable media that receive machine instructions as machine-readable signals. Term "machine-readable signal" refers to any signal used to provide machine instructions and/or data to the programmable processor.

The systems and techniques described herein may be implemented on a computing system (e.g., a data server) that includes back-end components, or a computing system (e.g., an application server) that includes middleware components, or a computing system (e.g., a user computer having a graphical user interface or a web browser through which the user may interact with the implementations of the systems and techniques described herein) that includes front-end components, or a computing system including such back-end components, middleware components, front-end components or any combination thereof. The components of the system may be interconnected by digital data communication (e.g., a communication network) in any form or medium. Examples of communication networks include local area networks (LANs), wide area networks (WANs), and the Internet.

A computer system can include a client and a server. The client and the server are generally remote from each other and usually interact through a communication network. The relationship of the client and the server is built by computer programs running on the respective computers and having a client-server relationship.

It should be understood that steps/operations may be reordered, added or deleted by using various forms of the flow charts shown above. For example, the steps/operations described in the present invention can be executed in parallel, sequentially or in different orders (which is not limited in the present invention), as long as the desired results of the technical solutions disclosed in the present invention can be achieved.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of the present invention.

It may be clearly understood by a person skilled in the art that, for the purpose of convenient and brief description, for a detailed working process of the foregoing system, device, and unit, refer to a corresponding process in the foregoing method embodiments. Details are not described herein again.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for determining a ranging/sidelink positioning policy, performed by a policy control function, PCF, network element, the method comprising:
determining (101, 901) a ranging/sidelink positioning policy for a user equipment, UE, according to policy-related information, wherein the ranging/sidelink positioning policy comprises a parameter required to perform a ranging/sidelink positioning service;
wherein the policy-related information comprises at least one of:
capability information received from an access and mobility management function, AMF, network element corresponding to the UE, wherein the capability information indicates that the UE at least supports ranging/sidelink positioning, or
a policy provision request comprised in a UE policy container received from the UE, wherein the policy provision request at least comprises a ranging/sidelink positioning policy provision request for requesting the ranging/sidelink positioning policy,
wherein the ranging/sidelink positioning policy comprises a dedicated parameter for the ranging/sidelink positioning service and a common parameter for both the ranging/sidelink positioning service and at least one of a proximity service, ProSe, and a vehicle to everything, V2X, service.

2. The method according to claim 1, wherein determining the ranging/sidelink positioning policy for the UE comprises:
determining, based on a local policy of the PCF network element or information obtained from a unified data repository, UDR, network element, the parameter and a corresponding parameter value comprised in the ranging/sidelink positioning policy.

3. The method according to claim 1, wherein
in a case that the policy-related information comprises the capability information, and the capability information indicates that the UE further supports the ProSe,
in a case that the policy-related information comprises the policy provision request, and the policy provision request further comprises a ProSe policy provision request for requesting a ProSe policy, or
in a case that the policy-related information comprises the capability information and the policy provision request, and the capability information indicates that the UE further supports the ProSe,
determining the ranging/sidelink positioning policy for the UE comprises:
determining (301, 401) the dedicated parameter and a corresponding parameter value comprised in the ranging/sidelink positioning policy according to a local policy of the PCF network element or information received from a UDR network element, and
determining (302) a parameter and a value of the parameter comprised in the ProSe policy for the UE as the common parameter and a corresponding parameter value comprised in the ranging/sidelink positioning policy, respectively, or determining (402) a parameter comprised in the ProSe policy for the UE as the common parameter comprised in the ranging/sidelink positioning policy, and obtaining a parameter value of each common parameter from the UDR.

4. The method according to claim 1, wherein
in a case that the policy-related information comprises the capability information, and the capability information indicates that the UE further supports the V2X,
in a case that the policy-related information comprises the policy provision request, and the policy provision request further comprises a V2X policy provision request for requesting a V2X policy, or
in a case that the policy-related information comprises the capability information and the policy provision request, and the capability information indicates that the UE further supports the V2X,
determining the ranging/sidelink positioning policy for the UE comprises:
determining (501, 601) the dedicated parameter and a corresponding parameter value comprised in the ranging/sidelink positioning policy according to a local policy of the PCF network element or information received from a UDR network element, and
determining (502) a parameter and a value of the parameter comprised in the V2X policy for the UE as the common parameter and a corresponding parameter value comprised in the ranging/sidelink positioning policy, respectively, or determining (602) a parameter comprised in the V2X policy for the UE as the common parameter comprised in the ranging/sidelink positioning policy, and obtaining a parameter value of each common parameter from the UDR network element.

5. The method according to claim 1, wherein
in a case that the policy-related information comprises the capability information, and the capability information indicates that the UE further supports the ProSe and the V2X,
in a case that the policy-related information comprises the policy provision request, and the policy provision request further comprises a ProSe policy provision request for requesting a ProSe policy and a V2X policy provision request for requesting a V2X policy, or
in a case that the policy-related information comprises the capability information and the policy provision request, and the capability information indicates that the UE further supports the ProSe and the V2X,
determining the ranging/sidelink positioning policy for the UE comprises:
determining (701, 801) the dedicated parameter and a corresponding parameter value comprised in the ranging/sidelink positioning policy according to a local policy of the PCF network element or information received from a UDR network element, and
determining (702) two sets of common parameters for the ranging/sidelink positioning policy, wherein a parameter and a value of the parameter comprised in the ProSe policy for the UE are determined as a first set common parameter and a corresponding parameter value comprised in the ranging/sidelink positioning policy, respectively, and a parameter and a value of the parameter comprised in the V2X policy for the UE are determined as a second set common parameter and a corresponding parameter value comprised in the ranging/sidelink positioning policy, respectively, or determining (802) two sets of common parameters for the ranging/sidelink positioning policy, and obtaining a parameter value of each common parameter from the UDR network element, wherein a parameter comprised in the ProSe policy for the UE is determined as a first set common parameter comprised in the ranging/sidelink positioning policy, and a parameter comprised in the V2X policy for the UE is determined as a second set common parameter comprised in the ranging/sidelink positioning policy.

6. The method according to any one of claims 1 to 5, further comprising:
sending (902) the ranging/sidelink positioning policy to the UE through the AMF network element.

7. A method for determining a ranging/sidelink positioning policy, performed by a user equipment, UE, the method comprising:
determining (1001, 1101) a ranging/sidelink positioning policy sent by an access and mobility management function, AMF, network element corresponding to the UE as the ranging/sidelink positioning policy for the UE, wherein the ranging/sidelink positioning policy comprises a parameter required to perform a ranging/sidelink positioning service, and the ranging/sidelink positioning policy comprises a dedicated parameter for the ranging/sidelink positioning service and a common parameter for both the ranging/sidelink positioning service and at least one of a proximity service, ProSe, and a vehicle to everything, V2X, service.

8. The method according to claim 7, further comprising:
performing (1102) the ranging/sidelink positioning service according to the ranging/sidelink positioning policy after receiving a ranging/sidelink positioning service request.

9. The method according to claim 7, wherein
the dedicated parameter comprises: a destination layer-2 identifier, a parameter for proximity communication 5, PC5, radio access technology, RAT, selection and PC5 transmission configuration selection, a parameter related to privacy, a parameter about when long term evolution, LTE, PC5 is selected, a parameter about when new ratio, NR, PC5 is selected, and a dedicated authorization policy parameter;
the common parameter comprises: a common authorization policy parameter, a radio parameter, a restricted ProSe discovery UE identifier parameter, a group member discovery parameter, a validity timing parameter, a groupcast mode ProSe direct communication parameter.

10. The method according to claim 9, wherein in a case that the UE is served by a next generation radio access network, NG-RAN or by an evolved universal mobile telecommunication system terrestrial radio access network, E-UTRAN, the dedicated authorization policy parameter comprises at least one of:
for the UE that supports the ranging/sidelink positioning, at least one public land mobile network, PLMN, in which the UE is authorized as a reference UE or a target UE to perform the ranging/sidelink positioning service;
for the UE that supports the ranging/sidelink positioning, at least one PLMN in which the UE is authorized to perform a regular ranging/sidelink positioning service to obtain a relevant distance;
for the UE that supports the ranging/sidelink positioning, at least one PLMN in which the UE is authorized to perform a regular ranging/sidelink positioning service to obtain a relevant direction;
for the UE that supports the ranging/sidelink positioning, at least one PLMN in which the UE is authorized to perform a high-accuracy ranging/sidelink positioning service to obtain a relevant distance; or
for the UE that supports the ranging/sidelink positioning, at least one PLMN in which the UE is authorized to perform a high-accuracy ranging/sidelink positioning service to obtain a relevant direction.

11. The method according to claim 9, wherein in a case that the UE is not served by a NG-RAN and is not served by an E-UTRAN, the dedicated authorization policy parameter comprises at least one of:
for the UE that supports the ranging/sidelink positioning, whether the UE is authorized as a reference UE or a target UE to perform the ranging/sidelink positioning service;
for the UE that supports the ranging/sidelink positioning, whether the UE is authorized to perform a regular ranging/sidelink positioning service to obtain a relevant distance;
for the UE that supports the ranging/sidelink positioning, whether the UE is authorized to perform a regular ranging/sidelink positioning service to obtain a relevant direction;
for the UE that supports the ranging/sidelink positioning, whether the UE is authorized to perform a high-accuracy ranging/sidelink positioning service to obtain a relevant distance; or
for the UE that supports the ranging/sidelink positioning, whether the UE is authorized to perform a high-accuracy ranging/sidelink positioning service to obtain a relevant direction.

12. A policy control function, PCF, network element, comprising:
a processing module (1201) configured to determine a ranging/sidelink positioning policy for a user equipment, UE, according to policy-related information, wherein the ranging/sidelink positioning policy comprises a parameter required to perform a ranging/sidelink positioning service;
wherein the policy-related information comprises at least one of:
capability information received from an access and mobility management function, AMF, network element corresponding to the UE, wherein the capability information indicates that the UE at least supports ranging/sidelink positioning, or
a policy provision request comprised in a UE policy container received from the UE, wherein the policy provision request at least comprises a ranging/sidelink positioning policy provision request for requesting the ranging/sidelink positioning policy,
wherein the ranging/sidelink positioning policy comprises a dedicated parameter for the ranging/sidelink positioning service and a common parameter for both the ranging/sidelink positioning service and at least one of a proximity service, ProSe, and a vehicle to everything, V2X, service.

13. A user equipment, UE, comprising:
a processing module (1401) configured to determine a ranging/sidelink positioning policy sent by an access and mobility management function, AMF, network element corresponding to the UE as the ranging/sidelink positioning policy for the UE, wherein the ranging/sidelink positioning policy comprises a parameter required to perform a ranging/sidelink positioning service,
and the ranging/sidelink positioning policy comprises a dedicated parameter for the ranging/sidelink positioning service and a common parameter for both the ranging/sidelink positioning service and at least one of a proximity service, ProSe, and a vehicle to everything, V2X, service.

## Patentansprüche

1. Ein Verfahren zum Bestimmen einer Ranging/Sidelink-Positionierungsrichtlinie, das von einem Richtliniensteuerfunktion-, PCF-, Netzwerkelement durchgeführt wird, wobei das Verfahren folgenden Schritt aufweist:
Bestimmen (101, 901) einer Ranging/Sidelink-Positionierungsrichtlinie für ein Nutzergerät, UE, gemäß richtlinienbezogenen Informationen, wobei die Ranging/Sidelink-Positionierungsrichtlinie einen Parameter aufweist, der erforderlich ist, um einen Ranging/Sidelink-Positionierungsdienst durchzuführen;
wobei die richtlinienbezogenen Informationen zumindest eines der folgenden Merkmale aufweisen:
Fähigkeitsinformationen, die von einem Zugriffs- und Mobilitätsverwaltungsfunktion-, AMF-, Netzwerkelement empfangen werden, das dem UE entspricht, wobei die Fähigkeitsinformationen angeben, dass das UE zumindest die Ranging/Sidelink-Positionierung unterstützt, oder
eine Richtlinienbereitstellungsanforderung, die in einem UE-Richtliniencontainer enthalten ist, der von dem UE empfangen wird, wobei die Richtlinienbereitstellungsanforderung zumindest eine Ranging/Sidelink-Positionierungsrichtlinienbereitstellungsanforderung zum Anfordern der Ranging/Sidelink-Positionierungsrichtlinie aufweist,
wobei die Ranging/Sidelink-Positionierungsrichtlinie einen zweckgebundenen Parameter für den Ranging/Sidelink-Positionierungsdienst und einen gemeinsamen Parameter für sowohl den Ranging/Sidelink-Positionierungsdienst als auch zumindest einen von einem Näherungsdienst, ProSe, und einem Vehicle-to-Everything-, V2X-, Dienst aufweist.

2. Das Verfahren gemäß Anspruch 1, wobei das Bestimmen der Ranging/Sidelink-Positionierungsrichtlinie für das UE folgenden Schritt aufweist:
Bestimmen, basierend auf einer lokalen Richtlinie des PCF-Netzwerkelements oder Informationen, die von einem Einheitliches-Datenrepository-, UDR-, Netzwerkelement erhalten werden, des Parameters und eines entsprechenden Parameterwerts, die in der Ranging/Sidelink-Positionierungsrichtlinie enthalten sind.

3. Das Verfahren gemäß Anspruch 1, wobei
in einem Fall, dass die richtlinienbezogenen Informationen die Fähigkeitsinformationen aufweisen und die Fähigkeitsinformationen angeben, dass das UE ferner den ProSe unterstützt,
in einem Fall, dass die richtlinienbezogenen Informationen die Richtlinienbereitstellungsanforderung aufweisen und die Richtlinienbereitstellungsanforderung ferner eine ProSe-Richtlinienbereitstellungsanforderung zum Anfordern einer ProSe-Richtlinie aufweist, oder
in einem Fall, dass die richtlinienbezogenen Informationen die Fähigkeitsinformationen und die Richtlinienbereitstellungsanforderung aufweisen und die Fähigkeitsinformationen angeben, dass das UE ferner den ProSe unterstützt,
das Bestimmen der Ranging/Sidelink-Positionierungsrichtlinie für das UE folgende Schritte aufweist:
Bestimmen (301, 401) des zweckgebundenen Parameters und eines entsprechenden Parameterwerts, die in der Ranging/Sidelink-Positionierungsrichtlinie enthalten sind, gemäß einer lokalen Richtlinie des PCF-Netzwerkelements oder Informationen, die von einem UDR-Netzwerkelement empfangen werden, und
Bestimmen (302) eines Parameters und eines Werts des Parameters, die in der ProSe-Richtlinie für das UE enthalten sind, als den gemeinsamen Parameter beziehungsweise einen entsprechenden Parameterwert, die in der Ranging/Sidelink-Positionierungsrichtlinie enthalten sind, oder Bestimmen (402) eines Parameters, der in der ProSe-Richtlinie für das UE enthalten ist, als den gemeinsamen Parameter, der in der Ranging/Sidelink-Positionierungsrichtlinie enthalten ist, und Erhalten eines Parameterwerts jedes gemeinsamen Parameters von dem UDR.

4. Das Verfahren gemäß Anspruch 1, wobei
in einem Fall, dass die richtlinienbezogenen Informationen die Fähigkeitsinformationen aufweisen und die Fähigkeitsinformationen angeben, dass das UE ferner den V2X unterstützt,
in einem Fall, dass die richtlinienbezogenen Informationen die Richtlinienbereitstellungsanforderung aufweisen und die Richtlinienbereitstellungsanforderung ferner eine V2X-Richtlinienbereitstellungsanforderung zum Anfordern einer V2X-Richtlinie aufweist, oder
in einem Fall, dass die richtlinienbezogenen Informationen die Fähigkeitsinformationen und die Richtlinienbereitstellungsanforderung aufweisen und die Fähigkeitsinformationen angeben, dass das UE ferner den V2X unterstützt,
das Bestimmen der Ranging/Sidelink-Positionierungsrichtlinie für das UE folgende Schritte aufweist:
Bestimmen (501, 601) des zweckgebundenen Parameters und eines entsprechenden Parameterwerts, die in der Ranging/Sidelink-Positionierungsrichtlinie enthalten sind, gemäß einer lokalen Richtlinie des PCF-Netzwerkelements oder Informationen, die von einem UDR-Netzwerkelement empfangen werden, und
Bestimmen (502) eines Parameters und eines Werts des Parameters, die in der V2X-Richtlinie für das UE enthalten sind, als den gemeinsamen Parameter beziehungsweise einen entsprechenden Parameterwert, die in der Ranging/Sidelink-Positionierungsrichtlinie enthalten sind, oder Bestimmen (602) eines Parameters, der in der V2X-Richtlinie für das UE enthalten ist, als den gemeinsamen Parameter, der in der Ranging/Sidelink-Positionierungsrichtlinie enthalten ist, und Erhalten eines Parameterwerts jedes gemeinsamen Parameters von dem UDR-Netzwerkelement.

5. Das Verfahren gemäß Anspruch 1, wobei
in einem Fall, dass die richtlinienbezogenen Informationen die Fähigkeitsinformationen aufweisen und die Fähigkeitsinformationen angeben, dass das UE ferner den ProSe und den V2X unterstützt,
in einem Fall, dass die richtlinienbezogenen Informationen die Richtlinienbereitstellungsanforderung aufweisen und die Richtlinienbereitstellungsanforderung ferner eine ProSe-Richtlinienbereitstellungsanforderung zum Anfordern einer ProSe-Richtlinie und eine V2X-Richtlinienbereitstellungsanforderung zum Anfordern einer V2X-Richtlinie aufweist, oder
in einem Fall, dass die richtlinienbezogenen Informationen die Fähigkeitsinformationen und die Richtlinienbereitstellungsanforderung aufweisen und die Fähigkeitsinformationen angeben, dass das UE ferner den ProSe und den V2X unterstützt,
das Bestimmen der Ranging/Sidelink-Positionierungsrichtlinie für das UE folgende Schritte aufweist:
Bestimmen (701, 801) des zweckgebundenen Parameters und eines entsprechenden Parameterwerts, die in der Ranging/Sidelink-Positionierungsrichtlinie enthalten sind, gemäß einer lokalen Richtlinie des PCF-Netzwerkelements oder Informationen, die von einem UDR-Netzwerkelement empfangen werden, und
Bestimmen (702) von zwei Sätzen gemeinsamer Parameter für die Ranging/Sidelink-Positionierungsrichtlinie, wobei ein Parameter und ein Wert des Parameters, die in der ProSe-Richtlinie für das UE enthalten sind, als ein erster Satz gemeinsamer Parameter beziehungsweise ein entsprechender Parameterwert bestimmt werden, die in der Ranging/Sidelink-Positionierungsrichtlinie enthalten sind, und ein Parameter und ein Wert des Parameters, die in der V2X-Richtlinie für das UE enthalten sind, als ein zweiter Satz gemeinsamer Parameter beziehungsweise ein entsprechender Parameterwert bestimmt werden, die in der Ranging/Sidelink-Positionierungsrichtlinie enthalten sind, oder Bestimmen (802) von zwei Sätzen gemeinsamer Parameter für die Ranging/Sidelink-Positionierungsrichtlinie und Erhalten eines Parameterwerts jedes gemeinsamen Parameters von dem UDR-Netzwerkelement, wobei ein Parameter, der in der ProSe-Richtlinie für das UE enthalten ist, als ein erster Satz gemeinsamer Parameter bestimmt wird, der in der Ranging/Sidelink-Positionierungsrichtlinie enthalten ist, und ein Parameter, der in der V2X-Richtlinie für das UE enthalten ist, als ein zweiter Satz gemeinsamer Parameter bestimmt wird, der in der Ranging/Sidelink-Positionierungsrichtlinie enthalten ist.

6. Das Verfahren gemäß einem der Ansprüche 1 bis 5, das ferner folgenden Schritt aufweist:
Senden (902) der Ranging/Sidelink-Positionierungsrichtlinie an das UE durch das AMF-Netzwerkelement.

7. Ein Verfahren zum Bestimmen einer Ranging/Sidelink-Positionierungsrichtlinie, das von einem Nutzergerät, UE, durchgeführt wird, wobei das Verfahren folgenden Schritt aufweist:
Bestimmen (1001, 1101) einer Ranging/Sidelink-Positionierungsrichtlinie, die von einem Zugriffs- und Mobilitätsverwaltungsfunktion-, AMF-, Netzwerkelement, das dem UE entspricht, als die Ranging/Sidelink-Positionierungsrichtlinie für das UE gesendet wird, wobei die Ranging/Sidelink-Positionierungsrichtlinie einen Parameter aufweist, der erforderlich ist, um einen Ranging/Sidelink-Positionierungsdienst durchzuführen, und die Ranging/Sidelink-Positionierungsrichtlinie einen zweckgebundenen Parameter für den Ranging/Sidelink-Positionierungsdienst und einen gemeinsamen Parameter für sowohl den Ranging/Sidelink-Positionierungsdienst als auch zumindest einen von einem Näherungsdienst, ProSe, und einem Vehicle-to-Everything-, V2X-, Dienst aufweist.

8. Das Verfahren gemäß Anspruch 7, das ferner folgenden Schritt aufweist:
Durchführen (1102) des Ranging/Sidelink-Positionierungsdienstes gemäß der Ranging/Sidelink-Positionierungsrichtlinie nach dem Empfangen einer Ranging/Sidelink-Positionierungsdienstanforderung.

9. Das Verfahren gemäß Anspruch 7, wobei
der zweckgebundene Parameter folgende Merkmale aufweist: eine Ziel-Layer-2-Kennung, einen Parameter für die Nahbereichkommunikation-5-, PC5-, Funkzugangstechnologie-, RAT-, Auswahl und PC5-Übertragungskonfigurationsauswahl, einen Parameter in Bezug auf den Datenschutz, einen Parameter darüber, wann die Long-Term-Evolution-, LTE-, PC5 ausgewählt wird, einen Parameter darüber, wann NR-, PC5 ausgewählt wird, und einen zweckgebundenen Autorisierungsrichtlinienparameter;
der gemeinsame Parameter folgende Merkmale aufweist: einen gemeinsamen Autorisierungsrichtlinienparameter, einen Funkparameter, einen Eingeschränkte-ProSe-Entdeckung-UE-Kennungsparameter, einen Gruppenmitglied-Entdeckungsparameter, einen Gültigkeits-Zeitsteuerungsparameter, einen Groupcast-Modus-ProSe-Direktkommunikationsparameter.

10. Das Verfahren gemäß Anspruch 9, wobei in einem Fall, in dem das UE von einem Funkzugangsnetz der nächsten Generation, NG-RAN, oder von einem entwickelten universellen terrestrischen Mobiltelekommunikationssystem-Funkzugangsnetz, E-UTRAN, bedient wird, der zweckgebundene Autorisierungsrichtlinienparameter zumindest eines der folgenden Merkmale aufweist:
für das UE, das die Ranging/Sidelink-Positionierung unterstützt, zumindest ein öffentliches terrestrisches Mobilfunknetz, PLMN, in dem das UE als ein Referenz-UE oder ein Ziel-UE dazu autorisiert ist, den Ranging/Sidelink-Positionierungsdienst durchzuführen;
für das UE, das die Ranging/Sidelink-Positionierung unterstützt, zumindest ein PLMN, in dem das UE dazu autorisiert ist, einen regulären Ranging/Sidelink-Positionierungsdienst durchzuführen, um eine relevante Entfernung zu erhalten;
für das UE, das die Ranging/Sidelink-Positionierung unterstützt, zumindest ein PLMN, in dem das UE dazu autorisiert ist, einen regulären Ranging/Sidelink-Positionierungsdienst durchzuführen, um eine relevante Richtung zu erhalten;
für das UE, das die Ranging/Sidelink-Positionierung unterstützt, zumindest ein PLMN, in dem das UE dazu autorisiert ist, einen hochgenauen Ranging/Sidelink-Positionierungsdienst durchzuführen, um eine relevante Entfernung zu erhalten; oder
für das UE, das die Ranging/Sidelink-Positionierung unterstützt, zumindest ein PLMN, in dem das UE dazu autorisiert ist, einen hochgenauen Ranging/Sidelink-Positionierungsdienst durchzuführen, um eine relevante Richtung zu erhalten.

11. Das Verfahren gemäß Anspruch 9, wobei in einem Fall, in dem das UE nicht von einem NG-RAN bedient wird und nicht von einem E-UTRAN bedient wird, der zweckgebundene Autorisierungsrichtlinienparameter zumindest eines der folgenden Merkmale aufweist:
für das UE, das die Ranging/Sidelink-Positionierung unterstützt, ob das UE als ein Referenz-UE oder ein Ziel-UE dazu autorisiert ist, den Ranging/Sidelink-Positionierungsdienst durchzuführen;
für das UE, das die Ranging/Sidelink-Positionierung unterstützt, ob das UE dazu autorisiert ist, einen regulären Ranging/Sidelink-Positionierungsdienst durchzuführen, um eine relevante Entfernung zu erhalten;
für das UE, das die Ranging/Sidelink-Positionierung unterstützt, ob das UE dazu autorisiert ist, einen regulären Ranging/Sidelink-Positionierungsdienst durchzuführen, um eine relevante Richtung zu erhalten;
für das UE, das die Ranging/Sidelink-Positionierung unterstützt, ob das UE dazu autorisiert ist, einen hochgenauen Ranging/Sidelink-Positionierungsdienst durchzuführen, um eine relevante Entfernung zu erhalten; oder
für das UE, das die Ranging/Sidelink-Positionierung unterstützt, ob das UE dazu autorisiert ist, einen hochgenauen Ranging/Sidelink-Positionierungsdienst durchzuführen, um eine relevante Richtung zu erhalten.

12. Ein Richtliniensteuerfunktion-, PCF-, Netzwerkelement, das folgendes Merkmal aufweist:
ein Verarbeitungsmodul (1201), das dazu konfiguriert ist , eine Ranging/Sidelink-Positionierungsrichtlinie für ein Nutzergerät, UE, gemäß richtlinienbezogenen Informationen zu bestimmen, wobei die Ranging/Sidelink-Positionierungsrichtlinie einen Parameter aufweist, der erforderlich ist, um einen Ranging/Sidelink-Positionierungsdienst durchzuführen;
wobei die richtlinienbezogenen Informationen zumindest eines der folgenden Merkmale aufweisen:
Fähigkeitsinformationen, die von einem Zugriffs- und Mobilitätsverwaltungsfunktion-, AMF-, Netzwerkelement empfangen werden, das dem UE entspricht, wobei die Fähigkeitsinformationen angeben, dass das UE zumindest die Ranging/Sidelink-Positionierung unterstützt, oder
eine Richtlinienbereitstellungsanforderung, die in einem UE-Richtliniencontainer enthalten ist, der von dem UE empfangen wird, wobei die Richtlinienbereitstellungsanforderung zumindest eine Ranging/Sidelink-Positionierungsrichtlinienbereitstellungsanforderung zum Anfordern der Ranging/Sidelink-Positionierungsrichtlinie aufweist,
wobei die Ranging/Sidelink-Positionierungsrichtlinie einen zweckgebundenen Parameter für den Ranging/Sidelink-Positionierungsdienst und einen gemeinsamen Parameter für sowohl den Ranging/Sidelink-Positionierungsdienst als auch zumindest einen von einem Näherungsdienst, ProSe, und einem Vehicle-to-Everything-, V2X-, Dienst aufweist.

13. Ein Nutzergerät, UE, das folgende Merkmale aufweist:
ein Verarbeitungsmodul (1401), das dazu konfiguriert ist, eine Ranging/Sidelink-Positionierungsrichtlinie zu bestimmen, die von einem Zugriffs- und Mobilitätsverwaltungsfunktion-, AMF-, Netzwerkelement, das dem UE entspricht, als die Ranging/Sidelink-Positionierungsrichtlinie für das UE gesendet wird, wobei die Ranging/Sidelink-Positionierungsrichtlinie einen Parameter aufweist, der erforderlich ist, um einen Ranging/Sidelink-Positionierungsdienst durchzuführen,
und die Ranging/Sidelink-Positionierungsrichtlinie einen zweckgebundenen Parameter für den Ranging/Sidelink-Positionierungsdienst und einen gemeinsamen Parameter für sowohl den Ranging/Sidelink-Positionierungsdienst als auch zumindest einen von einem Näherungsdienst, ProSe-, und einem Vehicle-to-Everything-, V2X-, Dienst aufweist.

## Revendications

1. Procédé de détermination d'une politique de positionnement de télémétrie/liaison latérale, réalisé par un élément de réseau à fonction de contrôle de politique, PCF, le procédé comprenant le fait de :
déterminer (101, 901) une politique de positionnement de télémétrie/liaison latérale pour un équipement utilisateur, UE, selon des informations relatives à une politique, dans lequel la politique de positionnement de télémétrie/liaison latérale comprend un paramètre nécessaire à la réalisation d'un service de positionnement de télémétrie/liaison latérale ;
dans lequel les informations relatives à la politique comprennent au moins l'un des éléments suivants :
des informations de capacités reçues d'un élément de réseau à fonction de gestion d'accès et de mobilité, AMF, correspondant à l'UE, dans lequel les informations de capacités indiquent que l'UE prend au moins en charge un positionnement de télémétrie/liaison latérale, ou
une demande de fourniture de politique comprise dans un conteneur de politiques d'UE reçu à partir de l'UE, dans lequel la demande de fourniture de politique comprend au moins une demande de fourniture de politique de positionnement de télémétrie/liaison latérale pour demander la politique de positionnement de télémétrie/liaison latérale,
dans lequel la politique de positionnement de télémétrie/liaison latérale comprend un paramètre dédié au service de positionnement de télémétrie/liaison latérale et un paramètre commun à la fois au service de positionnement de télémétrie/liaison latérale et à au moins l'un d'un service de proximité, ProSe, et d'un service de véhicule-à-tout, V2X.

2. Procédé selon la revendication 1, dans lequel la détermination de la politique de positionnement de télémétrie/liaison latérale pour l'UE comprend le fait de :
déterminer, sur la base d'une politique locale de l'élément de réseau à PCF ou d'informations obtenues à partir d'un élément de réseau de référentiel de données unifié, UDR, le paramètre et une valeur de paramètre correspondante comprise dans la politique de positionnement de télémétrie/liaison latérale.

3. Procédé selon la revendication 1, dans lequel
dans le cas où les informations relatives à la politique comprennent les informations de capacités, et où les informations de capacités indiquent que l'UE prend en charge, en outre, le ProSe,
dans le cas où les informations relatives à la politique comprennent la demande de fourniture de politique, et où la demande de fourniture de politique comprend en outre une demande de fourniture de politique ProSe pour demander une politique ProSe, ou
dans le cas où les informations relatives à la politique comprennent les informations de capacités et la demande de fourniture de politique, et où les informations de capacités indiquent que l'UE prend en charge, en outre, le ProSe,
la détermination de la politique de positionnement de télémétrie/liaison latérale pour l'UE comprend le fait de :
déterminer (301, 401) le paramètre dédié et une valeur de paramètre correspondante comprise dans la politique de positionnement de télémétrie/liaison latérale, selon une politique locale de l'élément de réseau à PCF ou des informations reçues d'un élément de réseau UDR, et
déterminer (302) un paramètre et une valeur du paramètre comprise dans la politique ProSe pour l'UE en tant que paramètre commun et une valeur de paramètre correspondante comprise dans la politique de positionnement de télémétrie/liaison latérale, respectivement, ou déterminer (402) un paramètre compris dans la politique ProSe pour l'UE en tant que paramètre commun compris dans la politique de positionnement de télémétrie/liaison latérale, et obtenir une valeur de paramètre de chaque paramètre commun à partir de l'UDR.

4. Procédé selon la revendication 1, dans lequel
dans le cas où les informations relatives à la politique comprennent les informations de capacités, et où les informations de capacités indiquent que l'UE prend en charge, en outre, le V2X,
dans le cas où les informations relatives à la politique comprennent la demande de fourniture de politique, et où la demande de fourniture de politique comprend en outre une demande de fourniture de politique V2X pour demander une politique V2X, ou
dans le cas où les informations relatives à la politique comprennent les informations de capacités et la demande de fourniture de politique, et où les informations de capacités indiquent que l'UE prend en charge, en outre, le V2X,
la détermination de la politique de positionnement de télémétrie/liaison latérale pour l'UE comprend le fait de :
déterminer (501, 601) le paramètre dédié et une valeur de paramètre correspondante comprise dans la politique de positionnement de télémétrie/liaison latérale, selon une politique locale de l'élément de réseau à PCF ou des informations reçues d'un élément de réseau UDR, et
déterminer (502) un paramètre et une valeur du paramètre comprise dans la politique V2X pour l'UE en tant que paramètre commun et une valeur de paramètre correspondante comprise dans la politique de positionnement de télémétrie/liaison latérale, respectivement, ou déterminer (602) un paramètre compris dans la politique V2X pour l'UE en tant que paramètre commun compris dans la politique de positionnement de télémétrie/liaison latérale, et obtenir une valeur de paramètre de chaque paramètre commun à partir de l'élément de réseau UDR.

5. Procédé selon la revendication 1, dans lequel
dans le cas où les informations relatives à la politique comprennent les informations de capacités, et où les informations de capacités indiquent que l'UE prend en charge, en outre, le ProSe et le V2X,
dans le cas où les informations relatives à la politique comprennent la demande de fourniture de politique, et où la demande de fourniture de politique comprend en outre une demande de fourniture de politique ProSe pour demander une politique ProSe et une demande de fourniture de politique V2X pour demander une politique V2X, ou
dans le cas où les informations relatives à la politique comprennent les informations de capacités et la demande de fourniture de politique, et où les informations de capacités indiquent que l'UE prend en charge, en outre, le ProSe et le V2X,
la détermination de la politique de positionnement de télémétrie/liaison latérale pour l'UE comprend le fait de :
déterminer (701, 801) le paramètre dédié et une valeur de paramètre correspondante comprise dans la politique de positionnement de télémétrie/liaison latérale, selon une politique locale de l'élément de réseau à PCF ou des informations reçues d'un élément de réseau UDR, et
déterminer (702) deux ensembles de paramètres communs pour la politique de positionnement de télémétrie/liaison latérale, dans lesquels un paramètre et une valeur du paramètre compris dans la politique ProSe pour l'UE sont déterminés en tant que premier ensemble de paramètres communs et une valeur de paramètre correspondante comprise dans la politique de positionnement de télémétrie/liaison latérale, respectivement, et un paramètre et une valeur du paramètre compris dans la politique V2X pour l'UE sont déterminés en tant que deuxième ensemble de paramètres communs et une valeur de paramètre correspondante comprise dans la politique de positionnement de télémétrie/liaison latérale, respectivement, ou déterminer (802) deux ensembles de paramètres communs pour la politique de positionnement de télémétrie/liaison latérale, et obtenir une valeur de paramètre de chaque paramètre commun à partir de l'élément de réseau UDR, dans lequel un paramètre compris dans la politique ProSe pour l'UE est déterminé en tant que premier ensemble de paramètres communs compris dans la politique de positionnement de télémétrie/liaison latérale, et un paramètre compris dans la politique V2X pour l'UE est déterminé en tant que deuxième ensemble de paramètres communs compris dans la politique de positionnement de télémétrie/liaison latérale.

6. Procédé selon l'une des revendications 1 à 5, comprenant en outre le fait de :
envoyer (902) la politique de positionnement de télémétrie/liaison latérale à l'UE par l'intermédiaire de l'élément de réseau AMF.

7. Procédé de détermination d'une politique de positionnement de télémétrie/liaison latérale, réalisé par un équipement utilisateur, UE, le procédé comprenant le fait de :
déterminer (1001, 1101) une politique de positionnement de télémétrie/liaison latérale envoyée par un élément de réseau à fonction de gestion d'accès et de mobilité, AMF, correspondant à l'UE en tant que politique de positionnement de télémétrie/liaison latérale pour l'UE, dans lequel la politique de positionnement de télémétrie/liaison latérale comprend un paramètre nécessaire à la réalisation d'un service de positionnement de télémétrie/liaison latérale, et la politique de positionnement de télémétrie/liaison latérale comprend un paramètre dédié au service de positionnement de télémétrie/liaison latérale et un paramètre commun à la fois au service de positionnement de télémétrie/liaison latérale et à au moins l'un d'un service de proximité, ProSe, et un service de véhicule-à-tout, V2X.

8. Procédé selon la revendication 7, comprenant en outre le fait de :
réaliser (1102) le service de positionnement de télémétrie/liaison latérale selon la politique de positionnement de télémétrie/liaison latérale après avoir reçu une demande de service de positionnement de télémétrie/liaison latérale.

9. Procédé selon la revendication 7, dans lequel
le paramètre dédié comprend : un identifiant de couche 2 de destination, un paramètre pour une communication de proximité 5, PC5, une sélection d'une technologie d'accès radio, RAT, et une sélection de configuration de transmission PC5, un paramètre relatif à la confidentialité, un paramètre concernant le moment où une évolution à long terme, LTE, PC5 est sélectionnée, un paramètre concernant le moment où un nouveau rapport, NR, PC5 est sélectionné, et un paramètre de politique d'autorisation dédié ;
le paramètre commun comprend : un paramètre de politique d'autorisation commune, un paramètre radio, un paramètre d'identifiant d'UE de découverte ProSe restreint, un paramètre de découverte de membre de groupe, un paramètre de durée de validité, un paramètre de communication directe ProSe en mode diffusion de groupe.

10. Procédé selon la revendication 9, dans lequel, dans le cas où l'UE est desservie par un réseau d'accès radio de nouvelle génération, NG-RAN, ou par un réseau d'accès radio terrestre de système de télécommunications mobiles universel évolué, E-UTRAN, le paramètre de politique d'autorisation dédié comprend au moins l'un des éléments suivants :
pour l'UE prenant en charge le positionnement de télémétrie/liaison latérale, au moins un réseau mobile terrestre public, PLMN, dans lequel l'UE est autorisée, en tant qu'UE de référence ou en tant qu'UE cible à réaliser le service de positionnement de télémétrie/liaison latérale ;
pour l'UE prenant en charge le positionnement de télémétrie/liaison latérale, au moins un PLMN dans lequel l'UE est autorisée à réaliser un service de positionnement de télémétrie/liaison latérale régulier pour obtenir une distance pertinente ;
pour l'UE prenant en charge le positionnement de télémétrie/liaison latérale, au moins un PLMN dans lequel l'UE est autorisée à réaliser un service de positionnement de télémétrie/liaison latérale régulier pour obtenir une direction pertinente ;
pour l'UE prenant en charge le positionnement de télémétrie/liaison latérale, au moins un PLMN dans lequel l'UE est autorisée à réaliser un service de positionnement de télémétrie/liaison latérale de haute précision pour obtenir une distance pertinente ; ou
pour l'UE prenant en charge le positionnement de télémétrie/liaison latérale, au moins un PLMN dans lequel l'UE est autorisée à réaliser un service de positionnement de télémétrie/liaison latérale de haute précision pour obtenir une direction pertinente ;

11. Procédé selon la revendication 9, dans lequel, dans le cas où l'UE n'est pas desservie par un NG-RAN et n'est pas desservie par un E-UTRAN, le paramètre de politique d'autorisation dédié comprend au moins l'un des éléments suivants :
pour l'UE prenant en charge le positionnement de télémétrie/liaison latérale, si l'UE est autorisée, en tant qu'UE de référence ou en tant qu'UE cible à réaliser le service de positionnement de télémétrie/liaison latérale ;
pour l'UE prenant en charge le positionnement de télémétrie/liaison latérale, si l'UE est autorisée à réaliser un service de positionnement de télémétrie/liaison latérale régulier pour obtenir une distance pertinente ;
pour l'UE prenant en charge le positionnement de télémétrie/liaison latérale, si l'UE est autorisée à réaliser un service de positionnement de télémétrie/liaison latérale régulier pour obtenir une direction pertinente ;
pour l'UE prenant en charge le positionnement de télémétrie/liaison latérale, si l'UE est autorisée à réaliser un service de positionnement de télémétrie/liaison latérale de haute précision pour obtenir une distance pertinente ; ou
pour l'UE prenant en charge le positionnement de télémétrie/liaison latérale, si l'UE est autorisée à réaliser un service de positionnement de télémétrie/liaison latérale de haute précision pour obtenir une direction pertinente.

12. Élément de réseau à fonction de contrôle de politique, PCF, comprenant :
un module de traitement (1201) configuré pour déterminer une politique de positionnement de télémétrie/liaison latérale pour un équipement utilisateur, UE, selon des informations relatives à une politique, dans lequel la politique de positionnement de télémétrie/liaison latérale comprend un paramètre nécessaire à la réalisation d'un service de positionnement de télémétrie/liaison latérale ;
dans lequel les informations relatives à la politique comprennent au moins l'un des éléments suivants :
des informations de capacités reçues d'un élément de réseau à fonction de gestion d'accès et de mobilité, AMF, correspondant à l'UE, dans lequel les informations de capacités indiquent que l'UE prend au moins en charge un positionnement de télémétrie/liaison latérale, ou
une demande de fourniture de politique comprise dans un conteneur de politiques d'UE reçu à partir de l'UE, dans lequel la demande de fourniture de politique comprend au moins une demande de fourniture de politique de positionnement de télémétrie/liaison latérale pour demander la politique de positionnement de télémétrie/liaison latérale,
dans lequel la politique de positionnement de télémétrie/liaison latérale comprend un paramètre dédié au service de positionnement de télémétrie/liaison latérale et un paramètre commun à la fois au service de positionnement de télémétrie/liaison latérale et à au moins l'un d'un service de proximité, ProSe, et d'un service de véhicule-à-tout, V2X.

13. Équipement d'utilisateur, UE, comprenant :
un module de traitement (1401) configuré pour déterminer une politique de positionnement de télémétrie/liaison latérale envoyée par un élément de réseau à fonction de gestion d'accès et de mobilité, AMF, correspondant à l'UE en tant que politique de positionnement de télémétrie/liaison latérale pour l'UE, dans lequel la politique de positionnement de télémétrie/liaison latérale comprend un paramètre nécessaire à la réalisation d'un service de positionnement de télémétrie/liaison latérale,
et la politique de positionnement de télémétrie/liaison latérale comprend un paramètre dédié au service de positionnement de télémétrie/liaison latérale et un paramètre commun à la fois au service de positionnement de télémétrie/liaison latérale et à au moins l'un d'un service de proximité, ProSe, et un service de véhicule-à-tout, V2X.
